# EUROPÄISCHE PATENTSCHRIFT

(11) **EP 3 050 862 B1**
(45) Veröffentlichungstag und Bekanntmachung des Hinweises auf die Patenterteilung: **08.09.2021**
(21) Anmeldenummer: 16152873.2
(22) Anmeldetag: 27.01.2016
(51) Int. Cl.: C04B 35/573, C04B 35/80, C04B 37/00, A61F 2/38

(54) **VERFAHREN ZUR HERSTELLUNG EINES KARBIDKERAMISCHEN BAUTEILS MIT SANDWICHSTRUKTUR UND KARBIDKERAMISCHES BAUTEIL MIT SANDWICHSTRUKTUR**
METHOD FOR PRODUCING A CARBIDE CERAMIC COMPONENT WITH SANDWICH STRUCTURE AND CARBIDE CERAMIC COMPONENT WITH SANDWICH STRUCTURE
PROCÉDÉ DE FABRICATION D'UN COMPOSANT EN CÉRAMIQUE A BASE DE CARBURE COMPRENANT UNE STRUCTURE EN SANDWICH ET COMPOSANT EN CÉRAMIQUE A BASE DE CARBURE COMPRENANT UNE STRUCTURE EN SANDWICH

(30) Priorität: 02.02.2015 DE 102015101481
(43) Veröffentlichungstag der Anmeldung: 03.08.2016
(73) Patentinhaber: Deutsches Zentrum für Luft- und Raumfahrt e.V., 51147 Köln (DE)
(72) Erfinder: HEIDENREICH, Bernhard, 71679 Asperg (DE); KOCH, Dietmar, 71083 Herrenberg (DE); KLETT, Yves, 70839 Gerlingen (DE)
(74) Vertreter: Hoeger, Stellrecht & Partner Patentanwälte mbB

(56) Entgegenhaltungen:
- EP-A2- 0 987 096
- EP-A2- 1 693 618
- DE-A1-102009 026 322
- US-A1- 2013 248 305
- None

## Beschreibung

Die Erfindung betrifft ein Verfahren, wie definiert im Anspruch 1, zur Herstellung eines karbidkeramischen Bauteils mit Sandwichstruktur, bei dem getrennt aus einem jeweiligen Vorkörper eine erste Deckelplatte und eine zweite Deckelplatte als offenporöser C-Körper oder offenporöser C/C-Körper und ein Kernstruktur-Körper als offenporöser C-Körper oder offenporöser C/C-Körper hergestellt werden, der Kernstruktur-Körper zwischen der ersten Deckelplatte und der zweiten Deckelplatte positioniert wird und mittels Fügepaste eine Kombination aus der ersten Deckelplatte, dem Kernstruktur-Körper und der zweiten Deckelplatte hergestellt wird, und anschließend ein Karbidbildungsvorgang an der Kombination durch Si-Infiltrierung durchgeführt wird.

Ferner betrifft die Erfindung ein karbidkeramisches Bauteil, wie definiert im Anspruch 10, mit Sandwichstruktur, umfassend eine erste Deckhaut, eine zweite Deckhaut und eine Kernstruktur, welche zwischen der ersten Deckhaut und der zweiten Deckhaut positioniert ist, wobei die erste Deckhaut, die zweite Deckhaut und die Kernstruktur aus SiC oder C-SiC oder C/C-SiC hergestellt sind, und wobei Wandungen der Kernstruktur mit der ersten Deckhaut und der zweiten Deckhaut über eine SiC-Fügung verbunden sind.

Die DE 10 2009 026 322 A1 offenbart ein Verfahren zum Herstellen eines Wärmeübertragers, bei dem aus Papier bestehende Preformen hergestellt werden und die Papierpreformen carbonisiert werden zur Bildung von Formteilen.

Die EP 1 693 618 A2 offenbart ein Verfahren zur Herstellung eines Porenkörpers für einen Porenbrenner, bei dem mindestens eine Platte hergestellt wird, welche mindestens eine zwischen Decklagen liegende Wellenlage aufweist, aus der mindestens eine Platte Streifen geschnitten werden, und Streifen über Decklagenbereiche zu einem Fügeverbund gefügt werden.

Die US 2013/0248305 offenbart ein Verfahren zur Herstellung einer Carbidkeramik-Bremsscheibe.

Die EP 0 987 096 A2 offenbart eine Leichtgewichtsstruktur.

Aus der DE 10 2009 026 322 A1 ist ein Verfahren zum Herstellen eines Wärmeübertragers bekannt, umfassend Fluide führende Kanäle aufweisende oder begrenzende Formteile aus keramischem Material. Es sind die Verfahrensschritte Herstellen von aus zumindest Zellulosefasern und zumindest einen Füllstoff enthaltendem Papier bestehenden Preformen und Carbonisieren der Papierpreformen zur Bildung der Formteile oder Abschnitte dieser vorgesehen.

Aus der EP 1 284 251 B1 ist ein Verfahren zur Herstellung eines porösen, leichten, wärmebeständigen Strukturmaterials auf Siliciumcarbidbasis bekannt. Es wird ein poröser Strukturkörper hergestellt, der Kohlenstoff enthält, wobei der poröse Strukturkörper Papier umfasst.

Aus der DE 103 61 346 A1 ist ein Verfahren zur Herstellung eines Platten-Wärmeübertragers bekannt.

Aus der DE 10 2005 045 307 A1 ist ein Bearbeitungsverfahren für einen offenporösen kohlenstoffhaltigen Körper bekannt.

Aus der EP 1 795 513 A1 ist ein Verfahren zur Herstellung von Siliciumcarbid-Keramik bekannt.

Aus der EP 1 681 278 A1 ist ein Verfahren zur Karbidbildner-Infiltration, insbesondere zur Silizierung, eines porösen kohlenstoffhaltigen Vorkörpers bekannt, bei dem flüssiges Karbidbildnermaterial auf eine Oberfläche des Vorkörpers aufgegossen und/oder aufgetropft wird.

Aus der EP 1 547 992 A1 ist ein Verfahren zur Herstellung eines Bauteils aus einem Faserverbundwerkstoff bekannt, bei dem eine Faser-Harz-Mischung mit nicht ausgehärtetem Harz pyrolysiert wird.

In dem Artikel "SILICON CARBIDE BASED SANDWICH STRUCTURES: PROCESSING AND PROPERTIES " von A. Ortona et al., Mechanical Properties and Performances of Engineering Ceramics and Composites VI, Seiten 171 - 179 sind integrale keramische Sandwichstrukturen beschrieben.

In der Dissertation "Entwicklung mechanisch/thermischer Architekturen und innovativer Strukturelemente im Rahmen zweier Satellitenmissionen des Stuttgarter Kleinsatellitenprogramms" von Michael Lengowski, Universität Stuttgart, Stuttgart 2013, Kapitel 5.2 sind Sandwichstrukturkerne und insbesondere Faltwabenkerne insbesondere aus kohlenfaserverstärktem Kunststoff beschrieben.

Der Erfindung liegt die Aufgabe zugrunde, ein Verfahren zur Herstellung eines karbidkeramischen Bauteils mit Sandwichstruktur bereitzustellen, mittels welchem sich solche Bauteile mit geringer Masse und hoher mechanischer Festigkeit realisieren lassen.

Diese Aufgabe wird bei dem eingangs genannten Verfahren erfindungsgemäß dadurch gelöst, dass eine Kernstruktur in dem Bauteil und der Kernstruktur-Körper Hohlräume oder Freiräume zwischen Kernstrukturwandungen aufweisen, dass der Kernstruktur-Körper mit Fügepaste versehen wird, wobei die Fügepaste auf Fügeflächen des Kernstruktur-Körpers appliziert wird, und ein mit Fügepaste versehener Kontaktbereich des Kernstruktur-Körpers in Kontakt mit der entsprechenden Deckelplatte gebracht wird, wobei die entsprechende Deckelplatte vor der Fügung nicht mit Fügepaste bestrichen wird, und dass an einem Verbindungsbereich zwischen dem Kernstruktur-Körper und der jeweiligen Deckelplatte ein Vor-Meniskusbereich an Fügepaste nach Aushärtung der Fügepaste hergestellt wird, wobei der Vor-Meniskusbereich eine variierende Breite bezogen auf eine Wandung des Kernstruktur-Körpers aufweist, die Breite ausgehend von der verbundenen Deckelplatte weg abnimmt und die Breite des Vor-Meniskusbereichs an der Deckelplatte größer ist als eine Breite der Wandung des Kernstruktur-Körpers, und bei dem hergestellten Bauteil zwischen einer Kernstruktur und einer Deckhaut ein Meniskusbereich an Fügematerial hergestellt wird, wobei der Meniskusbereich eine variierende Breite bezogen auf eine Wandung der Kernstruktur aufweist, die Breite ausgehend von der verbundenen Deckelplatte weg abnimmt und die Breite des Meniskusbereichs an der Deckelplatte größer ist als eine Breite der Wandung der Kernstruktur.

Bei dem erfindungsgemäßen Verfahren werden die wesentlichen Elemente des Bauteils, nämlich die erste Deckelplatte, die zweite Deckelplatte und der Kernstruktur-Körper, getrennt als offenporöse Kohlenstoffkörper hergestellt. Je nach Anwendung kann dabei der Kohlenstoffkörper faserverstärkt sein ("C/C-Körper") oder nicht ("C-Körper").

Es wird dann die Kombination hergestellt und anschließend erfolgt eine Karbidbildung durch Si-Infiltrierung. Das resultierende Bauteil ist ein karbidkeramisches Bauteil, wobei es noch eine Kohlenstoffphase enthalten kann. Wenn eine Faserverstärkung der ersten Deckelplatte und/oder zweiten Deckelplatte und/oder des Kernstruktur-Körpers vorgesehen ist, dann ist das hergestellte Bauteil ein C/C-SiC-Bauteil, wobei bei einer Ausführungsform sowohl die erste Deckelplatte als auch die zweite Deckelplatte und der Kernstruktur-Körper mit Kohlenstofffasern verstärkt sind.

Bei dem hergestellten Bauteil ist aus der ersten Deckelplatte eine karbidkeramische Deckhaut, aus der zweiten Deckelplatte eine karbidkeramische zweite Deckhaut und aus dem Kernstruktur-Körper eine karbidkeramische Kernstruktur entstanden.

Durch Verwendung der Fügepaste ist eine stoffschlüssige Verbindung zwischen der ersten Deckhaut, der Kernstruktur und der zweiten Deckhaut hergestellt.

Insbesondere werden der C-Körper oder C/C-Körper der ersten Deckelplatte und/oder der zweiten Deckelplatte und/oder des Kernstruktur-Körpers durch Pyrolyse eines entsprechenden Vorkörpers hergestellt. Der entsprechende Vorkörper wird insbesondere aus einem Harz gegebenenfalls mit einem Fasergebilde hergestellt. Die Harzaushärtung kann dabei vor der Pyrolyse oder während der Pyrolyse erfolgen. Das Ergebnis der Pyrolyse ist dann ein offenporöser Kohlenstoffkörper ohne Faserverstärkung (C-Körper) oder mit Faserverstärkung (C/C-Körper), je nachdem, ob der Vorkörper kein Fasergebilde oder ein Fasergebilde enthalten hat.

Bei einem vorteilhaften Ausführungsbeispiel wird der jeweilige Vorkörper aus einem Fasergebilde mit Kohlenstofffasern und insbesondere Fasergewebe und einem Kohlenstoff-Precursor-Material hergestellt. Das Kohlenstoff-Precursor-Material sorgt bei der Pyrolyse für die Bildung von Kohlenstoff und zur Bereitstellung einer offenporösen Struktur. Das Kohlenstoff-Precursor-Material ist beispielsweise ein Phenolharz.

Bei einem Ausführungsbeispiel wird der jeweilige Vorkörper aus einem Prepreg-Material hergestellt. Ein Prepreg-Material setzt sich zusammen aus einem Fasergebilde und insbesondere Fasergewebe, welches mit Harz als Kohlenstoff-Precursor vorgetränkt ist. Es lässt sich dadurch eine relativ einfache Verarbeitbarkeit realisieren.

Eine Kernstruktur in dem Bauteil und der Kernstruktur-Körper weist Hohlräume oder Freiräume zwischen Kernstrukturwandungen auf, wobei insbesondere Kernstrukturwandungen sowohl mit der ersten Deckelplatte als auch der zweiten Deckelplatte verbunden werden. Die Hohlräume oder Freiräume sind makroskopische Räume, welche beispielsweise Abmessungen von mehreren Millimetern oder im Zentimeter-Bereich aufweisen. Dadurch lässt sich ein Bauteil in Leichtbauweise mit relativ geringer Masse realisieren. Bei speziellen Anwendungen lassen sich die Hohlräume oder Freiräume auch zur Durchströmung nutzen.

Günstig ist es, wenn der Kernstruktur-Körper (und dann auch die Kernstruktur) aus einer einzigen Wandungslage hergestellt wird, wobei insbesondere eine Wandung der Wandungslage sowohl mit der ersten Deckelplatte als auch der zweiten Deckelplatte verbunden wird. Dadurch lässt sich ein Bauteil in Leichtbauweise realisieren und dabei auf einfache Weise herstellen.

Insbesondere wird der Kernstruktur-Körper aus einer einzigen Lage von Prepreg-Material hergestellt. Dadurch ergibt sich bei einfacher Herstellbarkeit ein Bauteil in Leichtbauweise, wobei eine hohe Festigkeit der Sandwichstruktur realisierbar ist.

Beispielsweise weist ein Vorkörper für die Kernstruktur und/oder der Kernstruktur-Körper ein Gewebe-Flächengewicht für Kohlenstofffasern kleiner als 500 g/m² und insbesondere kleiner als 400 g/m² und insbesondere kleiner als 300 g/m² und insbesondere kleiner als 200 g/m² und insbesondere kleiner als 150 g/m² auf. Angestrebt wird ein Gewebe-Flächengewicht in der Größenordnung von 100 g/m². Es lässt sich dadurch ein Bauteil mit hoher mechanischer Stabilität realisieren.

Bei einem Ausführungsbeispiel wird der Kernstruktur-Körper als Faltstruktur oder Faltwabenstruktur hergestellt. Bezüglich der Ausbildung von Faltwabenstruktur wird auf die Dissertation von M. Lengowski (siehe oben) verwiesen. Es ergibt sich bei relativ einfacher Herstellbarkeit eine stabile Struktur für das hergestellte Bauteil. Durch die Faltstruktur oder Faltwabenstruktur ergibt sich eine gute Verbindbarkeit mit den Deckelplatten mit guter Abstützbarkeit und Fügbarkeit.

Es ist auch möglich, dass der Kernstruktur-Körper als Wellblechstruktur hergestellt wird.

Bei einem weiteren Ausführungsbeispiel wird der Kernstruktur-Körper als Wabenstruktur hergestellt, welche insbesondere Waben mit Dreiecksquerschnitt und/oder Rechteckquerschnitt und/oder Sechseckquerschnitt umfasst.

Es ist dabei möglich, dass Einzelwaben hergestellt werden, welche zu der Wabenstruktur durch entsprechende Fügung verbunden werden.

Beispielsweise wird eine Einzelwabe aus einem Flechtschlauch hergestellt. Ein Flechtschlauch wird insbesondere auf einen entsprechenden Kern wie Sechseckkern aufgesetzt, um Waben einer definierten geometrischen Form wie Sechseckform auszubilden. Der Flechtschlauch ist oder wird insbesondere mit Harz als Kohlenstoff-Precursor getränkt.

Es ist auch möglich, dass eine Einzelwabe als Gitterrohr hergestellt wird und insbesondere durch Wicklung von Kohlenstoff-Rovings an einem Wickelkern hergestellt wird. Der Wickelkern hat eine entsprechende Form wie Sechseckform, um beispielsweise eine Einzelwabe mit Sechseckquerschnitt herzustellen. Die Kohlenstoff-Rovings sind oder werden insbesondere mit Harz getränkt.

Es ist auch möglich, die Wabenstruktur durch Fügung von Platten mit Ausbuchtungen herzustellen, wobei die Ausbuchtungen dann so ausgebildet sind, dass sich beim Zusammensetzen die entsprechende Wabenform ergibt.

Bei einem weiteren Ausführungsbeispiel wird der Kernstruktur-Körper aus C-Körper-Bändern und/oder C/C-Körper-Bändern hergestellt, wobei insbesondere Bänder mit Schlitzen versehen sind und der Kernstruktur-Körper durch Fixierung von Bändern in Schlitzen von weiteren Bändern hergestellt wird. Durch das Zusammensetzen und insbesondere Zusammenstecken von Bändern lässt sich eine Zellstruktur realisieren, wobei die einzelnen Zellen beispielsweise einen rechteckigen (einschließlich quadratischen) oder dreieckigen Querschnitt aufweisen.

Wenn der Kernstruktur-Körper ein C/C-Körper ist, d. h. faserverstärkt ist, sind vorteilhafterweise Kohlenstofffasern in einer 0°/90°-Orientierung oder +45°/- 45°-Orientierung angeordnet. Bei einer 0°/90°-Orientierung lässt sich bei der Herstellung der Verschnitt minimieren. Bei einer +45°/-45°-Orientierung erhält man eine hohe Schubfestigkeit und hohe Schubsteifigkeit.

Insbesondere ist der Kernstruktur-Körper für die erste Deckelplatte und zweite Deckelplatte linienhaft über linienhafte Segmente des Kernstruktur-Körpers verbunden, wobei insbesondere linienhafte Segmente an Stirnseiten von Kernstrukturwandungen angeordnet oder gebildet sind. Es ergibt sich dadurch bei hoher mechanischer Festigkeit eine gewichtssparende Bauweise. Der Einsatz von Fügepaste zur Verbindung zwischen den Deckelplatte und dem Kernstruktur-Körper lässt sich minimieren, so dass wiederum eine gewichtssparende Bauweise realisierbar ist.

Der Kernstruktur-Körper wird mit Fügepaste versehen und ein mit Fügepaste versehener Kontaktbereich des Kernstruktur-Körpers wird in Kontakt mit der entsprechenden Deckelplatte gebracht, wobei die entsprechende Deckelplatte vor der Fügung nicht mit Fügepaste bestrichen wird. Die Fügepaste wird auf Fügeflächen des Kernstruktur-Körpers appliziert, beispielsweise durch Sprühen, Rollen, Aufpinseln, Wulstauftragung oder durch ein Touchverfahren. Es hat sich gezeigt, dass sich so eine stabile mechanische Verbindung zwischen der entsprechenden Deckelplatte und der Kernstruktur realisieren lässt. Es wird dafür gesorgt, dass ausreichend Fügepastematerial zwischen der Kernstruktur und der entsprechenden Deckelplatte vorhanden ist, um eine stoffschlüssige Verbindung zu realisieren, wobei die entsprechende Fügung eine hohe mechanische Stabilität aufweist. Es hat sich gezeigt, dass sich dann nach Aushärtung der Fügepaste ein Vor-Meniskusbereich in einem Fügebereich ausbilden lässt, welcher in einem Meniskusbereich in dem hergestellten Bauteil resultiert.

In der Kombination der ersten Deckelplatte, des Kernstruktur-Körpers und der zweiten Deckelplatte wird Fügepaste nur im Kontaktbereich des Kernstruktur-Körpers mit der ersten Deckelplatte und der zweiten Deckelplatte an der entsprechenden Deckelplatte angeordnet und diese Anordnung erfolgt über Kontakt mit dem Kernstruktur-Körper, welcher mit Fügepaste versehen ist. Dadurch lässt sich sicherstellen, dass Fügepaste sich nur an einem Teilbereich der entsprechenden Deckelplatte befindet, nämlich nur dort, wo auch eine Wandung des Kernstruktur-Körpers positioniert ist. Dadurch lässt sich der Einsatz von Fügepaste minimieren. Es wird keine Fügepaste in den Hohlräumen an einer Deckelplatte außerhalb von Fügebereichen abgelegt.

Günstig ist es, wenn für das Versehen des Kernstruktur-Körpers mit Fügepaste ein Hilfswerkzeug verwendet wird, an welchem eine Fügepastenschicht einer definierten Dicke hergestellt wird. Es lässt sich dann auf einfache Weise durch Eintauchen einer entsprechenden Wandung des Kernstruktur-Körpers in diese Fügepastenschicht eine Fügepastenbeaufschlagung des Kernstruktur-Körpers auf definierte Weise erreichen.

Insbesondere weist das Hilfswerkzeug einen Aufnahmebereich für Fügepaste auf, welcher durch Abziehleisten begrenzt ist, wobei die definierte Dicke der Fügepastenschicht durch Abziehen zwischen den Abziehleisten hergestellt wird. Es lässt sich dadurch auf einfache Weise die definierte Fügepastenschicht herstellen. Bei entsprechender Viskosität der Fügepaste kann dabei die Fügepastenschicht eine einheitliche Dicke aufweisen. Es ist aber grundsätzlich auch möglich, eine Fügepastenschicht mit einer variierenden Dicke und insbesondere einer bezüglich des Abstands zwischen den Abziehleisten monoton variierenden Dicke bereitzustellen.

Es ist dann günstig, wenn der Kernstruktur-Körper mit einer Wandung, welche mit der entsprechenden Deckelplatte zu verbinden ist, in die Fügepastenschicht eingetaucht wird und insbesondere bis zur Berührung mit einer Bodenfläche des Aufnahmebereichs eingetaucht wird. Dadurch erfolgt eine definierte "Ablage" von Fügepaste an dem Kernstruktur-Körper.

An einem Verbindungsbereich zwischen dem Kernstruktur-Körper und der jeweiligen Deckelplatte wird ein Vor-Meniskusbereich an Fügepaste und bei dem hergestellten Bauteil zwischen einer Kernstruktur und einer Deckhaut ein Meniskusbereich an Fügematerial hergestellt. Es lässt sich dadurch eine mechanisch stabile Verbindung erreichen unter minimiertem Einsatz von Fügepaste. Der Vor-Meniskusbereich wird an dem Kernstruktur-Körper und der jeweiligen Deckelplatte nach Aushärtung der Fügepaste vor dem Karbidbildungsvorgang hergestellt.

Der Meniskusbereich und Vor-Meniskusbereich weist eine variierende Breite bezogen auf eine Wandung der Kernstruktur bzw. des Kernstruktur-Körpers auf, wobei die Breite ausgehend von der verbundenen Deckelplatte weg abnimmt und die Breite des Meniskusbereichs oder Vor-Meniskusbereichs an der Deckelplatte größer ist als eine Breite der Wandung. Dadurch lässt sich eine mechanisch stabile Verbindung erreichen. Das Abnehmen der Breite muss dabei nicht unbedingt monoton sein.

Als Fügepaste wird beispielsweise ein Phenolharz verwendet. Eine Viskosität der Fügepaste kann durch Zugabe von Kohlenstoffpulver und/oder SiC-Pulver und/oder Kaffeepulver (getrocknet oder pyrolysiert) eingestellt werden. Kaffeepulver weist eine offenporöse Struktur auf, was vorteilhaft für die Fügung ist.

An der Kombination aus erster Deckelplatte, zweiter Deckelplatte und Kernstruktur-Vorkörper wird die Fügepaste gehärtet und insbesondere in einem Temperaturbereich zwischen 100°C und 250°C. Dadurch entsteht ein Vor-Meniskusbereich, aus welchem dann nach der Silizierung ein Meniskusbereich an jeweiligen Fügebereichen des karbidkeramischen Bauteils resultiert.

Günstig ist es, wenn die Karbidbildung über Flüssigsilizierung insbesondere unter Vakuumbedingungen erfolgt und beispielsweise über das LSI-Verfahren erfolgt. Es wird dann eine definierte, berechnete Menge an Silizium zur Karbidbildung hinzugegeben. Es lässt sich dadurch eine homogene Silizierung der Kombination mit den Elementen erste Deckelplatte, zweite Deckelplatte und Kernstruktur-Körper erreichen, ohne dass ein Silizium-Überschuss auf Bauteiloberflächen vorliegt. Es wird dadurch auch eine Fügung zwischen diesen Elementen hergestellt. Grundsätzlich lässt sich die Kombination frei aufstellen, d. h. es ist eine Stützung mit geringer Auflagefläche wie beispielsweise nur am Rand möglich. Dadurch werden Silizium-Anhäufungen durch Kapillarkräfte vermieden und überschüssiges Silizium kann abgedampft werden. Die Hohlräume in dem Kernstruktur-Körper ermöglichen ebenfalls das Abdampfen eines Siliziumüberschusses. Es lässt sich dadurch ein Bauteil herstellen, welches im Wesentlichen keine freie Silizium-Phase enthält. Erfindungsgemäß wird ein karbidkeramisches Bauteil mit Sandwichstruktur bereitgestellt, welches mit dem erfindungsgemäßen Verfahren hergestellt ist. Das karbidkeramische Bauteil ist insbesondere ein faserverstärktes karbidkeramisches Bauteil und insbesondere ein C/C-SiC-Bauteil, wenn mindestens eines der Elemente erste Deckelplatte, zweite Deckelplatte, Kernstruktur-Körper mit Kohlenstofffasern faserverstärkt ist.

Erfindungsgemäß wird ein karbidkeramisches Bauteil der eingangs genannten Art bereitgestellt, bei dem zwischen Wandungen der Kernstruktur Hohlräume liegen und ein Verbindungsbereich zwischen einer Wandung der Kernstruktur und der entsprechenden Deckhaut einen Meniskusbereich im Wesentlichen aus SiC-Material aufweist, wobei der Meniskusbereich eine variierende Breite aufweist, wobei von der entsprechenden Deckhaut weg die Breite des Meniskusbereichs sich verringert und wobei an der Deckhaut der Meniskusbereich eine größere Breite als eine entsprechende Wandung der Kernstruktur aufweist.

Es ist dadurch ein Bauteil in Leichtbauweise mit hoher mechanischer Stabilität bereitgestellt.

Die SiC-Fügung ist über eine Fügepastenverbindung und anschließende Silizierung entstanden.

Das erfindungsgemäße Bauteil weist die bereits im Zusammenhang mit dem erfindungsgemäßen Verfahren erläuterten Vorteile auf.

Bei einer Faserverstärkung ist es günstig, wenn Kohlenstofffasern in der Kernstruktur in 0°/90°-Orientierung oder +45°/-45°-Orientierung bezüglich einer Begrenzungsseite angeordnet sind. Es ergibt sich dadurch eine hohe mechanische Stabilität bei einfacher Herstellbarkeit. Bei einer +45°/-45°-Orientierung von entsprechenden Fasern ergibt sich eine hohe mechanische Schubfestigkeit und hohe mechanische Schubsteifigkeit der Kernstruktur und damit des hergestellten Bauteils.

Die erste Deckhaut ist aus einer ersten Deckelplatte hergestellt, wobei die erste Deckelplatte ein offenporöser C-Körper oder C/C-Körper ist. Die zweite Deckhaut ist aus einer zweiten Deckelplatte hergestellt, wobei die zweite Deckelplatte ein offenporöser C-Körper oder C/C-Körper ist, und ist die Kernstruktur aus einem offenporösen C-Körper oder C/C-Körper hergestellt. Dadurch ergibt sich bei einfacher Herstellungsweise eine hohe mechanische Stabilität.

Ein Verbindungsbereich zwischen einer Wandung der Kernstruktur und der entsprechenden Deckhaut weist einen Meniskusbereich im Wesentlichen SiC-Material auf. Dadurch ergibt sich eine feste Verbindung. Dadurch wiederum weist das hergestellte Bauteil in der Sandwichstruktur eine hohe mechanische Festigkeit auf. Diese hohe mechanische Festigkeit lässt sich dabei bei gewichtssparender Ausbildung des Bauteils realisieren.

Der Meniskusbereich hat eine variierende Breite, wobei von der entsprechenden Deckhaut weg die Breite des Meniskusbereichs sich verringert und wobei an der Deckhaut der Meniskusbereich eine größere Breite als eine entsprechende Wandung der Kernstruktur aufweist. Die variierende Breite muss dabei nicht unbedingt monoton sein. Es ergibt sich dadurch eine mechanisch stabile Fügung zwischen der Kernstruktur und der entsprechenden Deckhaut.

Günstig ist es, wenn in den Hohlräumen außerhalb des Meniskusbereichs die entsprechende Deckhaut keine Beschichtung aufweist, welche aus Fügepaste entstanden ist. Dadurch wird ein unnötiger Gewichtszusatz in dem hergestellten Bauteil vermieden.

Günstig ist es, wenn die Kernstruktur mit den Deckhäuten über linienhafte Fügesegmente verbunden ist, wobei insbesondere die linienhaften Fügesegmente an Wandungen der Kernstruktur angeordnet sind. Die linienhaften Fügesegmente sind über Stirnseiten von Wandungen der Kernstruktur gebildet. Es ergibt sich dadurch eine gewichtssparende Bauweise für das Bauteil mit Sandwichstruktur mit sicherer mechanischer Verbindung zwischen den Deckhäuten und der Sandwichstruktur. Die mechanische Verbindung ist dabei stoffschlüssig.

Günstig ist es, wenn die Kernstruktur bezüglich ihrer Wandungen einlagig ist und insbesondere eine Wandung der Kernstruktur sowohl mit der ersten Deckhaut als auch mit der zweiten Deckhaut verbunden ist. Dadurch ergibt sich ein Bauteil in Leichtbauweise mit stabiler mechanischer Verbindung.

Beispielsweise ist die Kernstruktur ausgebildet als Faltwabenstruktur oder Wellblechstruktur oder Wabenstruktur oder Bandstruktur aus aneinander positionierten und miteinander fixierten Bändern. Es ergibt sich dadurch eine steife Kernstruktur, um ein Bauteil mit Leichtbauweise zu realisieren.

Insbesondere ist das Bauteil als faserverstärktes karbidkeramisches Bauteil ausgebildet, wobei die erste Deckhaut, die zweite Deckhaut und die Kernstruktur aus C/C-SiC sind.

Die nachfolgende Beschreibung bevorzugter Ausführungsformen dient im Zusammenhang mit den Zeichnungen der näheren Erläuterung der Erfindung. Es zeigen:
- Figur 1: eine schematische Schnittdarstellung eines Ausführungsbeispiels eines erfindungsgemäßen C/C-SiC-Bauteils mit Sandwichstruktur;
- Figur 2: ein Ausführungsbeispiel einer Kernstruktur als Faltwabenstruktur;

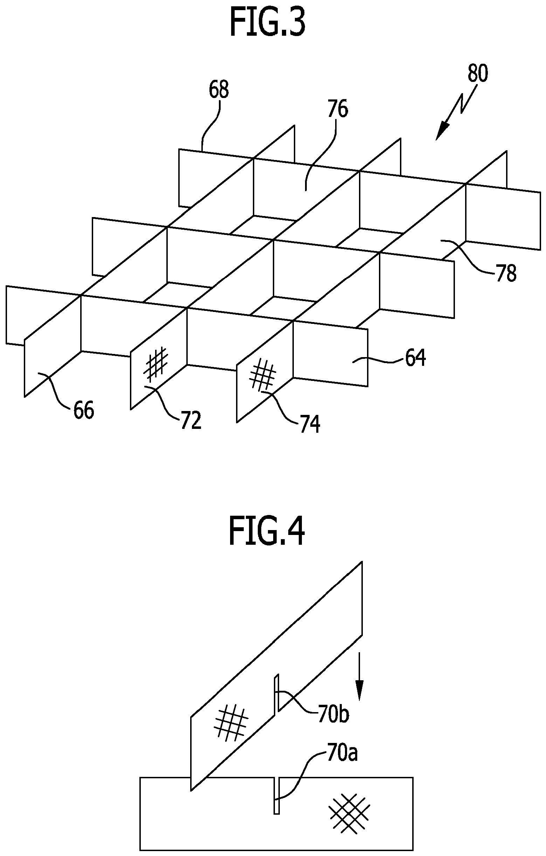

- Figur 3: ein Ausführungsbeispiel einer Kernstruktur als Struktur aus aneinander positionierten und miteinander fixierten Bändern;
- Figur 4: schematisch einen Einzelschritt bei der Positionierung und Fixierung von Bändern miteinander zur Herstellung der Kernstruktur gemäß Figur 3;
- Figur 5: schematisch einen Ausschnitt aus einer Kernstruktur als Wabenstruktur;
- Figur 6(a): einen Herstellungsschritt zur Herstellung einer Wabenstruktur durch Aneinanderfügen von entsprechenden Platten;
- Figur 6(b): einen Plattenverbund zur Herstellung einer Wabenstruktur;
- Figur 7: ein Ausführungsbeispiel einer Einzelwabe, welche aus einem Flechtschlauch hergestellt ist;
- Figur 8: ein Ausführungsbeispiel einer Einzelwabe mit einer Gitterstruktur;
- Figur 9: schematisch einen Herstellungsschritt zur Herstellung einer Einzelwabe mit Gitterstruktur durch Wicklung von Kohlenstoff-Rovings an einen Wickelkern;
- Figur 10: schematisch die Einzelschritte zur Herstellung des C/C-SiC-Bauteils gemäß Figur 1;
- Figur 11(a), (b), (c): schematisch Einzelschritte zur Fügung einer Kernstruktur mit Deckelplatten vor der Karbidbildung;
- Figur 12: eine vergrößerte Darstellung eines Verbindungsbereichs zwischen einer Kernstruktur und einer Deckelplatte an einem hergestellten Bauteil mit dem Verbindungsbereich (Fügebereich); und
- Figur 13(a), (b): schematisch die Schritte und Nachteile bei einem nicht erfindungsgemäßen Fügeverfahren.

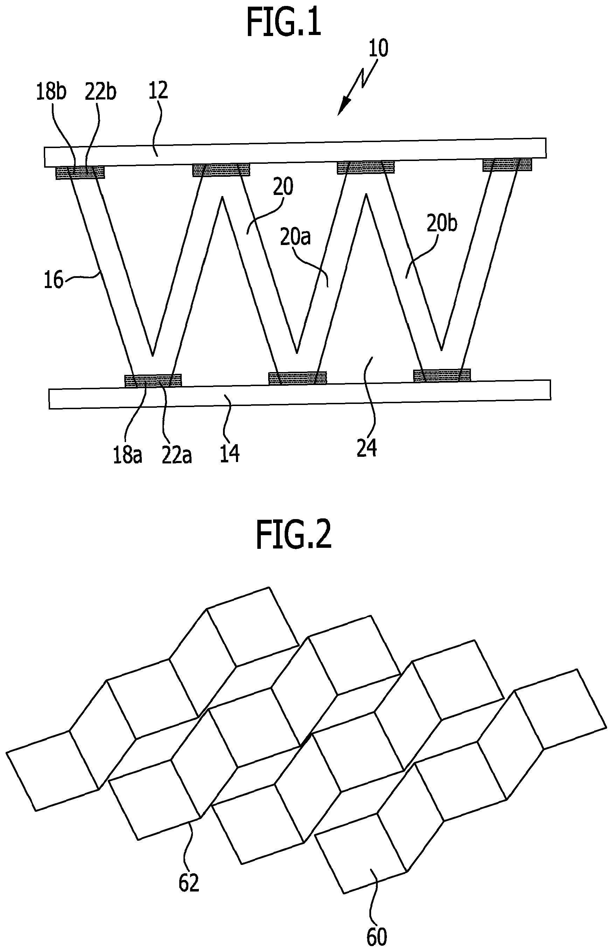

Ein Ausführungsbeispiel eines erfindungsgemäßen karbidkeramischen Bauteils ist ein C/C-SiC-Bauteil mit Sandwichstruktur, welches in Figur 1 schematisch in einer Schnittdarstellung gezeigt ist und dort mit 10 bezeichnet ist. Es umfasst eine erste Deckhaut 12 und eine zweite Deckhaut 14. Die erste Deckhaut 12 und die zweite Deckhaut 14 sind plattenförmig ausgebildet. Sie sind bei der Herstellung des Bauteils 10 aus Deckelplatten hergestellt. Zwischen der ersten Deckhaut 12 und der zweiten Deckhaut 14 ist eine Kernstruktur 16 angeordnet. Die Kernstruktur 16 ist über Fügebereiche 18a, 18b sowohl mit der ersten Deckhaut 12 als auch mit der zweiten Deckhaut 14 verbunden und dabei insbesondere stoffschlüssig verbunden.

Die Kernstruktur 16 weist Wandungen 20 auf. Die Wandungen 20 erstrecken sich zwischen der ersten Deckhaut 12 und der zweiten Deckhaut 14.

Die Kernstruktur 16 ist bezüglich ihrer Wandungen 20 insbesondere einlagig ausgebildet: Eine Wandung 20 ist an einem ersten Endbereich 22a mit der einen Deckhaut (wie beispielsweise der zweiten Deckhaut 14) verbunden und an einem gegenüberliegenden zweiten Endbereich 22b über einen entsprechenden Fügebereich 18b mit der anderen Deckhaut, der ersten Deckhaut 12, verbunden.

Zwischen benachbarten Wandungen 20a, 20b sind an der Kernstruktur 16 Hohlräume 24 gebildet. Die Hohlräume 24 sind makroskopische Hohlräume, welche Abmessungen beispielsweise im Millimeterbereich aufweisen.

Ein Hohlraum 24 ist insbesondere durch eine Deckhaut 12 oder 14 begrenzt. Durch die Kombination der ersten Deckhaut 12, der Kernstruktur 16 und der zweiten Deckhaut 14 weist das Bauteil 10 eine Sandwichstruktur auf.

Das Bauteil 10 ist ein C/C-SiC-Bauteil, d. h. ein Bauteil, welches eine SiC-Phase aufweist sowie eine Kohlenstoffphase und Kohlenstofffasern ("C/C").

Die erste Deckhaut 12 besteht aus SiC (ohne freie Kohlenstoffphase), aus C-SiC (aus einer SiC-Phase und Kohlenstoffphase ohne Kohlenstofffasern), oder aus C/C-SiC (aus einer SiC-Phase, Kohlenstoffphase und Kohlenstofffasern). Entsprechend besteht die zweite Deckhaut 14 aus SiC, C-SiC oder C/C-SiC.

Die Kernstruktur 16 ist aus C/C-SiC hergestellt.

Grundsätzlich kann die Kernstruktur 16 auch keine C-Fasern enthalten.

Insbesondere ist das Bauteil 10 vollständig aus C/C-SiC hergestellt, d. h. die erste Deckhaut 12, die zweite Deckhaut 14 und die Kernstruktur 16 sind aus C/C-SiC-Material hergestellt und die erste Deckhaut 12, die zweite Deckhaut 14 und die Kernstruktur 16 weisen Kohlenstofffasern auf, d. h. die Elemente des Bauteils 10, nämlich die erste Deckhaut 12, die zweite Deckhaut 14 und die Kernstruktur 16 sind faserverstärkt.

Die Fügebereiche 18a, 18b, über welche die erste Deckhaut 12 und die zweite Deckhaut 14 mit der Kernstruktur 16 verbunden sind, bestehen im Wesentlichen aus SiC.

Außerhalb von Fügebereichen 18a, 18b und insbesondere in Hohlräumen 24 liegt an der zweiten Deckhaut 12 und der zweiten Deckhaut 14 keine "Beschichtung", welche aus einer Fügepaste bei der Fügung der Elemente entstanden ist. Wie unten stehend noch näher erläutert wird, wird die Verbindung zwischen einem Kernstruktur-Körper und entsprechenden Deckplatten für die erste Deckhaut 12 und die zweite Deckhaut 14 so durchgeführt, dass Fügepaste nur im Bereich von Kontaktbereichen der Kernstruktur 16 mit den Deckelplatten sich befindet und nicht in für die Verbindung nicht benötigten Bereichen an den Deckelplatten.

Dadurch lässt sich eine Massenminimierung für das Bauteil 10 erreichen.

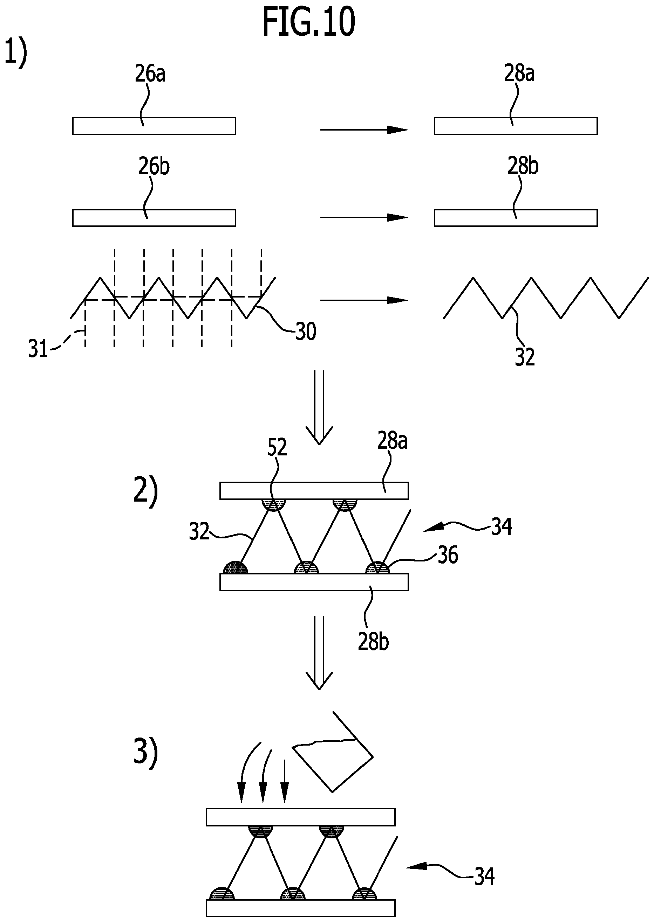

Das Bauteil 10 wird grundsätzlich wie folgt hergestellt (vgl. Figur 10).

Es wird zunächst ein Vorkörper 26a für eine erste Deckelplatte 28a hergestellt. Entsprechend wird ein Vorkörper 26b für eine zweite Deckelplatte 28b hergestellt.

Für ein Bauteil 10, bei dem die erste Deckhaut 12 und die zweite Deckhaut 14 sowie die Kernstruktur 16 aus C/C-SiC hergestellt sind, werden die Vorkörper 26a, 26b beispielsweise mittels eines Fasergewebes und eines Kohlenstoff-Precursors beispielsweise in Harzform hergestellt. Beispielsweise wird in einer Form ein Gewebe gelegt und es erfolgt eine Harztränkung und eine Formgebung beispielsweise durch Pressen. Das Harz ist beispielsweise ein Phenolharz.

Es ist beispielsweise auch möglich, dass ein mit Harz vorgetränktes Material (Prepreg-Material) verwendet wird.

Die Kernstruktur 16 wird entsprechend aus einem Vorkörper 30 beispielsweise mit einem Formwerkzeug 31 hergestellt. Es wird ein Vorkörper 30 mit einer bestimmten geometrischen Ausbildung bereitgestellt (dies wird untenstehend noch näher erläutert). Der Vorkörper 30 wird insbesondere mittels Fasergeweben und Kohlenstoff-Precursor beispielsweise aus Prepreg-Material und insbesondere einlagigem Prepreg-Material hergestellt.

Es ergibt sich dann ein Kernstruktur-Körper 32.

Die erste Deckelplatte 28a, die zweite Deckelplatte 28b und die Kernstruktur 32 sind Kohlenstoffkörper. Wenn der entsprechende Vorkörper 26a, 26b, 30 Kohlenstofffasern enthalten hat, dann sind die entsprechenden Körper 28a, 28b und 32 C/C-Körper.

Bei einem Ausführungsbeispiel wird der Vorkörper 26a, 26b, 30 zunächst ausgehärtet. Die Vorkörper 26a, 26b, 30 werden dabei getrennt hergestellt.

Diese Vorkörper 26a, 26b, 30 werden dann einer Pyrolyse unterzogen. Als Ergebnis der Pyrolyse entstehen die Körper 28a, 28b, 32 aus C/C-Material, wobei diese Körper offenporös sind.

Es ist auch möglich, dass ein Vorkörper mit nicht ausgehärtetem Kohlenstoff-Precursor (insbesondere Harz) pyrolysiert wird, um die Körper 28a, 28b, 32, welche offenporös und aus C/C-Material sind, herzustellen. Ein entsprechendes Verfahren ist in der EP 1 547 992 A1 beschreiben, auf welches ausdrücklich Bezug genommen wird.

Die so getrennt hergestellten Elemente, nämlich die erste Deckelplatte 28, die zweite Deckelplatte 28b und der Kernstruktur-Körper 32, welcher insbesondere einstückig ist, werden zu einer Kombination 34 verbunden. (Grundsätzlich können auch mehrere einstückige Kernstruktur-Körper 32 vorgesehen sein, welche verbunden werden. Es wird dabei der Kernstruktur-Körper 32 zwischen der ersten Deckelplatte 28a und der zweiten Deckelplatte 28b positioniert. Eine Verbindung wird über Fügepaste 36 durchgeführt.)

Die Fügepaste umfasst beispielsweise ein Phenolharz, wobei Additive wie Kohlenstoff und/oder SiC und/oder Kaffeepulver zugemischt sein können.

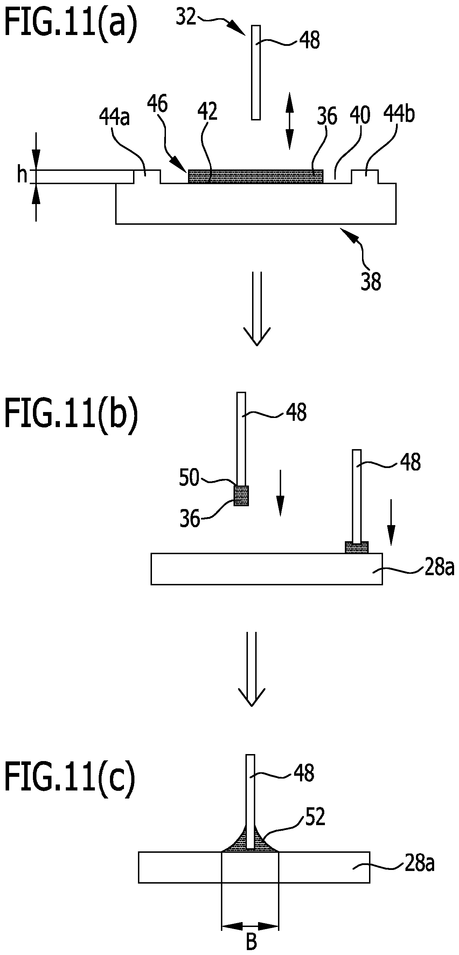

Zur Verbindung der ersten Deckelplatte 28a mit dem Kernstruktur-Körper 32 und zur Verbindung mit der zweiten Deckelplatte 28b wird bei einem Ausführungsbeispiel wie folgt vorgegangen:
Es wird ein Hilfswerkzeug 38 bereitgestellt (Figur 11(a)). Dieses Hilfswerkzeug 38 hat einen Aufnahmebereich 40 für Fügepaste. Der Aufnahmebereich 40 umfasst dabei eine insbesondere ebene und glatte Bodenfläche 42.

Der Aufnahmebereich 40 ist durch Abziehleisten 44a, 44b, welche beabstandet sind, begrenzt. Eine Abziehleiste 44a, 44b weist eine Höhe h über der Fläche 42 auf. Über die Höhe h lässt sich eine Dicke einer Schicht an Fügepaste 36 einstellen.

Je nach Bauteil 10 sind unterschiedliche Hilfswerkzeuge 38 mit unterschiedlichen Höhen h der Abziehleisten 44a, 44b vorgesehen bzw. an einem Hilfswerkzeug 38 sind Abziehleisten 44a, 44b unterschiedlicher Höhe einsetzbar.

In den Aufnahmebereich 40 wird Fügepaste 36 gebracht.

Es wird dann mit einem entsprechenden Abziehlineal über den Abziehleisten 44a, 44b abgezogen. Es entsteht dadurch an dem Aufnahmebereich 40 eine Schicht 46 definierter Dicke h an Fügepaste 36.

Grundsätzlich weisen die Abziehleisten 44a, 44b die gleiche Höhe h auf. Die Schicht 46 hat dadurch eine gleichmäßige Dicke.

Es ist grundsätzlich auch möglich, dass die Abziehleisten 44a, 44b eine unterschiedliche Höhe aufweisen, um eine Schicht 46 mit variierender Dicke bereitzustellen. Dies kann zur Herstellung bestimmter Bauteile 10 vorteilhaft sein.

Es wird dann der Kernstruktur-Körper 32 mit einer Wandung 48, welche mit der ersten Deckelplatte 28a oder der zweiten Deckelplatte 28b zu verbinden ist, in die Schicht 46 eingetaucht und insbesondere bis zum Kontakt mit der Bodenfläche 42 eingetaucht und dann wieder ausgetaucht.

An der Wandung 48 haftet an einem Eintauchbereich 50 (Figur 11(b)) Fügepaste 36 an. Die Wandung 48 des Kernstruktur-Körpers 32 wird dann, wie in Figur 11(b) angedeutet, auf die entsprechende Deckelplatte (wie beispielsweise die erste Deckelplatte 28a) aufgesetzt.

Es bildet sich dann nach Aushärtung der Fügepaste in einem Fügebereich der Wandung 48 und der entsprechenden Deckelplatte 28a ein Vor-Meniskusbereich 52 an Fügepaste aus. Dieser Vor-Meniskusbereich 52 weist eine variierende Breite B auf. Die Breite B nimmt von der Deckelplatte (in dem Beispiel gemäß Figur 11(c)) ab. An der Deckelplatte 28a hat der Vor-Meniskusbereich 52 seine größte Breite. Diese Breite Bₘₐₓ ist dabei größer als eine entsprechende Breite der Wandung 48.

Zur Herstellung dieser Fügung in der Kombination 34 ist es notwendig, dass die Fügepaste 36 eine geeignete Viskosität aufweist, um insbesondere das Anhaften an der Wandung 48 beim Austauchen aus der Schicht 46 zu erreichen und um den Vor-Meniskusbereich 52 ausbilden zu können.

Die Viskosität kann durch Zumischung von Kohlenstoffpulver und/oder SiC-Pulver und/oder Kaffeepulver in das Grundmaterial der Fügepaste eingestellt werden und es kann dadurch eine Anpassung an die Erfordernisse erfolgen.

Durch Verwendung eines Hilfswerkzeugs 38 mit einem entsprechenden großen Aufnahmebereich 40 bzw. durch das Vorsehen von mehreren Hilfswerkzeugen 38 oder durch das Einzeleintauchen von Wandungen 48 lassen sich alle Wandungen 48 des Kernstruktur-Körpers 32 entsprechend mit Fügepaste versehen.

Durch die Verfahrensdurchführung mit der Ausbildung von Vor-Meniskusbereichen 52 erhält man eine gewichtsminimierbare Fügung für das Bauteil 10 mit einer hohen Fügefestigkeit.

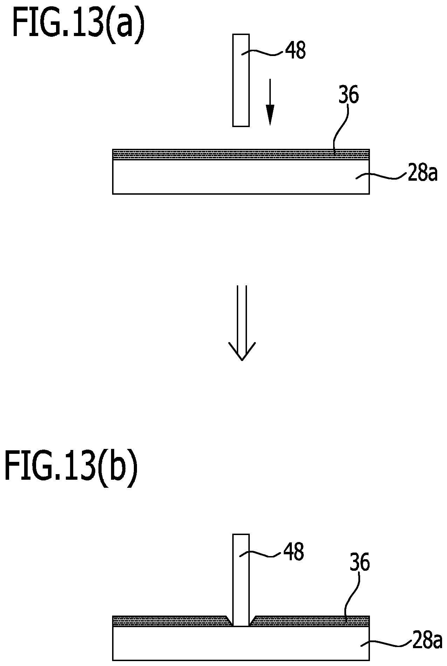

Im Vergleich dazu ist in Figur 13(a) und (b) ein Verfahren, das nicht im Einklang mit der Erfindung ist, dargestellt, für welches sich gezeigt hat, dass die Fügefestigkeit verringert ist: Bei diesem Verfahren wird beispielsweise die Deckelplatte 28a mit Fügepaste 36 versehen, d. h. es wird eine Schicht an Fügepaste 36 auf der entsprechenden Deckelplatte wie der Deckelplatte 28a hergestellt. Es wird dann eine Wandung 48 aufgedrückt. Wie in Figur 13(b) ersichtlich ist, erfolgt beim Eindrücken der Wandung 48 in diese Schicht eine Verdrängung an Fügepaste, so dass im Fügebereich weniger Fügepaste 36 zur Verbindung zur Verfügung steht. Dies resultiert in einer weniger guten Verbindung in dem Bauteil 10 im Vergleich zu dem Verfahren gemäß den Figuren 11(a) bis (c) mit der Ausbildung eines Vor-Meniskusbereichs 52.

Darüber hinaus genügt es bei dem Verfahren mit der Ausbildung des Vor-Meniskusbereichs 52, Fügepaste 36 lokal an der entsprechenden Wandung 48 aufzubringen, und außerhalb von Fügebereichen 18a, 18b kann die erste Deckhaut 12 und die zweite Deckhaut 14 frei von aus der Fügepaste resultierendem Material gehalten werden.

Bei dem Verfahren gemäß Figur 13(a) und (b) ist jedoch die gesamte Deckelplatte 28a mit Fügepaste 36 bestrichen, wobei ein Großteil dieser Fügepaste nicht zur Fügung beiträgt und eine Massenerhöhung des Bauteils 10 bewirkt.

Nach der Herstellung der Kombination 34 durch Fügung wird die Fügepaste 36 ausgehärtet und es bildet sich der Vor-Meniskusbereich 52 aus. Es erfolgt eine Aushärtung beispielsweise in dem Temperaturbereich zwischen 100°C und 180°C. Die Fügepaste 36 benetzt dann entsprechende Fügeteile (die Wandung 48 und die Deckelplatten 28a, 28b) nur an Kontaktflächen und es entsteht kein Mehrgewicht durch unnötige Fügepaste 36.

Über das Hilfswerkzeug 38 lässt sich dabei auch die Fügepastenmenge zur Ausbildung eines Fügebereichs definiert einstellen.

Es erfolgt dann ein Karbidbildungsvorgang an der Kombination 34 (vgl. Figur 10). Es erfolgt eine Silizierung der Kombination 34 zur Ausbildung von SiC-Phasen an der Kombination 34. Die Karbidbildnerinfiltration erfolgt dabei derart, dass Kohlenstofffasern in den entsprechenden Elementen der Kombination 34 nicht vollständig aufgelöst werden, d. h. dass auch bei Angriff von Silizium zur Bildung von SiC Kohlenstofffasern nicht vollständig aufgelöst werden, sondern dass die Faserstruktur noch erhalten bleibt.

Die Silizierung der Kombination 34 erfolgt insbesondere über ein Flüssigsilizierverfahren wie beispielsweise das LSI-Verfahren. In diesem Zusammenhang wird beispielhaft auf die EP 1 681 278 A1 verwiesen, auf die ausdrücklich Bezug genommen wird.

Insbesondere wird die Menge an zugeführtem flüssigen Silizium so definiert eingestellt, dass das hergestellte Bauteil 10 keine freie Si-Phase enthält.

Das Endergebnis dieses Verfahrens ist dann das Bauteil 10. Aus der ersten Deckelplatte 28a ist die erste Deckhaut 12 entstanden. Aus der zweiten Deckelplatte 28b ist die zweite Deckhaut 14 entstanden. Aus dem Kernstruktur-Körper 32 (welcher wiederum aus dem Vorkörper 30 für die Kernstruktur hergestellt wurde) ist die Kernstruktur 16 entstanden. Die Kernstruktur 16 ist mit der ersten Deckhaut 12 und der zweiten Deckhaut 14 stoffschlüssig verbunden, wobei der Verbindungsbereich (Fügebereich) aus den jeweiligen Vor-Meniskusbereichen 52 entstanden ist.

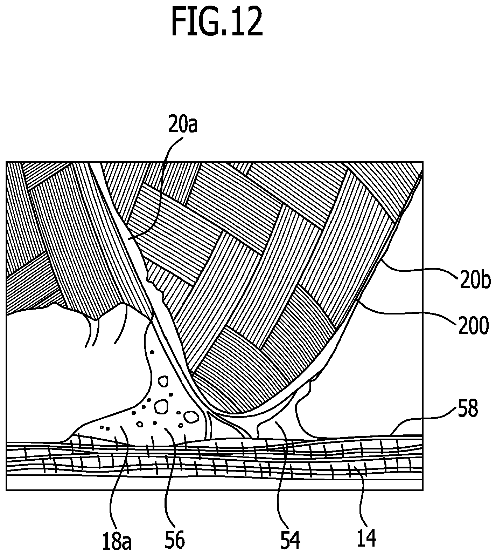

Das Verbindungsmaterial an den Fügebereichen (den Meniskusbereichen 54), welches SiC ist und einstückig mit dem entsprechenden Materialbereich der jeweiligen Deckhaut 12 bzw. 14 und Kernstruktur 16 verbunden ist, resultiert aus Karbidbildung an den Vor-Meniskusbereichen 52. In Figur 12 ist eine vergrößerte Aufnahme eines tatsächlich hergestellten Bauteils 10 gezeigt. Es sind Wandungen 20a, 20b mit dazwischenliegendem Hohlraum gezeigt. Es ist ferner die zweite Deckhaut 14 gezeigt. Man erkennt die Faserstruktur der zweiten Deckhaut 14 und der Wandungen 20a, 20b. Insbesondere ist eine 0°/90°-Orientierung von Fasern in den Wandungen 20a, 20b zu einer Wandungsbegrenzungslinie 200 erkennbar.

Der Fügebereich 18a zwischen den Wandung 20a, 20b der entsprechenden Kernstruktur 16 und der zweiten Deckhaut 14 weist einen Meniskusbereich 54 auf. Dieser Meniskusbereich 54 ist aus dem Vor-Meniskusbereich 52 bei der Silizierung entstanden.

Aus dem Bild in Figur 12 ist ersichtlich, dass ein entsprechendes Fügematerial 56 begrenzt auf den Fügebereich 18a ist. Außerhalb davon in einem entsprechenden Hohlraum der Kernstruktur 16 (vgl. den Bereich mit dem Bezugszeichen 58) ist keine Beschichtung, welche aus Fügepaste 36 entstanden wäre, erkennbar.

Wie erwähnt wird dadurch eine Fügung im Bauteil 10 mit hoher mechanischer Festigkeit erreicht und es entsteht keine Zusatzmasse durch unnötige Fügepaste.

Die Kernstruktur 16, welche aus dem Kernstruktur-Körper 32 hergestellt wurde, wobei dieser wiederum aus dem Vorkörper 30 hergestellt wurde, kann unterschiedliche geometrische Formen aufweisen.

Der Vorkörper wird insbesondere aus einem Fasergewebe hergestellt, bei welchem Fasern unterschiedlicher Orientierung und insbesondere mit zwei unterschiedlichen Orientierungen verwendet werden. Beispielsweise liegt eine 0°/90°-Orientierung von Fasern vor oder eine +45°/-45°-Orientierung zu einer Begrenzungslinie vor. (In dem Beispiel gemäß Figur 12 sind die zwei unterschiedlichen Orientierungen in der Wandung 48 der Kernstruktur 16 erkennbar.)

Wie bereits erwähnt wird vorteilhafterweise zur Herstellung der Kernstruktur 16 eine bezüglich der Wandungen 20 einlagige Struktur verwendet.

Insbesondere wird nur eine einzige Lage eines Kohlenstofffaser-Prepreg-Gewebes verwendet. Dieses Material hat insbesondere ein Gewebe-Flächengewicht (für die Kohlenstofffaser) kleiner als 500 g/m² und vorzugsweise kleiner als 400 g/m² und vorzugsweise kleiner als 300 g/m² und insbesondere kleiner als 200 g/m². Besonders günstig ist es, wenn das Gewebe-Flächengewicht kleiner als 150 g/m² ist. Angestrebt wird beispielsweise ein Gewebe-Flächengewicht von 100 g/m².

Der Kernstruktur-Körper 32 wird beispielsweise so hergestellt, dass eine verzugsfreie Pyrolyse durch ungestützte Pyrolyse durchgeführt wird. Es ist auch eine Stützung mit Graphitkernen oder eine Stützung mit einer Graphitschüttung möglich. Wie oben erwähnt kann auch eine Aushärtung bei der Pyrolyse erfolgen, wobei insbesondere dann eine solche direkte Pyrolyse einer entsprechend geformten Prepreg-Lage in einem Formwerkzeug (insbesondere aus Graphit) durchgeführt wird.

Die Kernstruktur 16 kann je nach Anwendung unterschiedliche geometrische Gestalten haben bzw. auf unterschiedliche Art und Weise hergestellt sein.

Bei einem Ausführungsbeispiel (Figur 2) ist die Kernstruktur 16 eine Faltwabenstruktur 60. Eine solche Faltwabenstruktur 60 wird durch entsprechende Formung einer Prepreg-Lage und anschließende Pyrolyse (und Karbidbildnerbildung) hergestellt.

Die Faltwabenstruktur 60 weist Wandungen 62 auf, welche in dem entsprechenden Bauteil 10 in einem spitzen Winkel zu der ersten Deckhaut 12 und der zweiten Deckhaut 14 orientiert sind.

Bezüglich Faltwabenstruktur wird auf die Dissertation von M. Langowski, a.a.O, Kapitel 5.2 verwiesen.

Bei einem weiteren Ausführungsbeispiel einer Kernstruktur 16 sind Bänder 64 vorgesehen, welche unterschiedliche Orientierungen aufweisen.

Bei einem Ausführungsbeispiel ist ein erster Typ von Bändern 66 vorgesehen, und ist ein zweiter Typ von Bändern 68 vorgesehen. Die Bänder des ersten Typs 66 und die Bänder des zweiten Typs 68 sind quer und insbesondere senkrecht zueinander orientiert.

Die Bändern 64 weisen jeweils aneinander angepasste Schlitze 70a, 70b auf. Die Schlitze sind so ausgebildet, dass Bänder ineinander über die Schlitze 70a, 70b steckbar sind und sich so eine entsprechende Gesamtstruktur ausbilden lässt. Die Schlitze 70a, 70b können dabei eine solche Breite aufweisen, dass sie gleich sind wie eine Bandbreite eines einzusteckenden Bands, um insbesondere eine Übergangspassung oder eine leichte Presspassung zu erreichen.

Die Faserorientierung in den entsprechenden Bändern 64 kann eine 0°/90°-Orientierung sein (angedeutet durch das Bezugszeichen 72) oder eine +45°/- 45°-Orientierung (angedeutet durch das Bezugszeichen 74).

Entsprechende Einzelteile und insbesondere Bänder 64 mit einer 90°/90°-Orientierung lassen sich einfacher einstellen, da der Verschnitt minimierbar ist.

Üblicherweise sind mechanische Eigenschaften von Bändern 64 mit einer +45°/-45°-Orientierung besser im Vergleich mit einer 0°/90°-Orientierung, da eine höhere Schubfestigkeit und höhere Schubsteifigkeit vorliegt. Jedoch ist der Herstellungsaufwand vergrößert aufgrund mehr anfallendem Verschnitt.

Durch entsprechend ineinandergesteckte Bänder 64 des ersten Typs 66 und des zweiten Typs 68 wird eine Zellenanordnung erreicht mit Zellen 76, welche insbesondere einen rechteckigen einschließlich quadratischen Querschnitt haben. Es ist beispielsweise aber auch möglich, Zellen 76 mit dreieckigem Querschnitt herzustellen.

Entsprechende Wandungen 78 einer solchen Kernstruktur 80 liegen quer und insbesondere senkrecht zu der ersten Deckhaut 12 und der zweiten Deckhaut 14 in dem Bauteil 10.

Bei einem weiteren Ausführungsbeispiel hat die Kernstruktur 16 eine Wabenstruktur 82. Die Kernstruktur 80, welche aus den Bändern 64 hergestellt ist, ist ebenfalls eine Wabenstruktur.

Die Wabenstruktur 82 umfasst bei einem Ausführungsbeispiel individuelle Röhrchen 84, welche miteinander verbunden sind. Die Röhrchen 84 werden insbesondere individuell hergestellt und dann nachträglich insbesondere vor der Pyrolyse oder zumindest vor der Silizierung miteinander verbunden.

Die Röhrchen weisen beispielsweise einen Durchmesser D in der Größenordnung zwischen 10 mm und 40 mm auf.

Beispielsweise haben die Röhrchen 84 einen sechseckigen Querschnitt. Es kann beispielsweise auch ein dreieckiger Querschnitt oder ein rechteckiger (einschließlich quadratischer) Querschnitt vorgesehen sein.

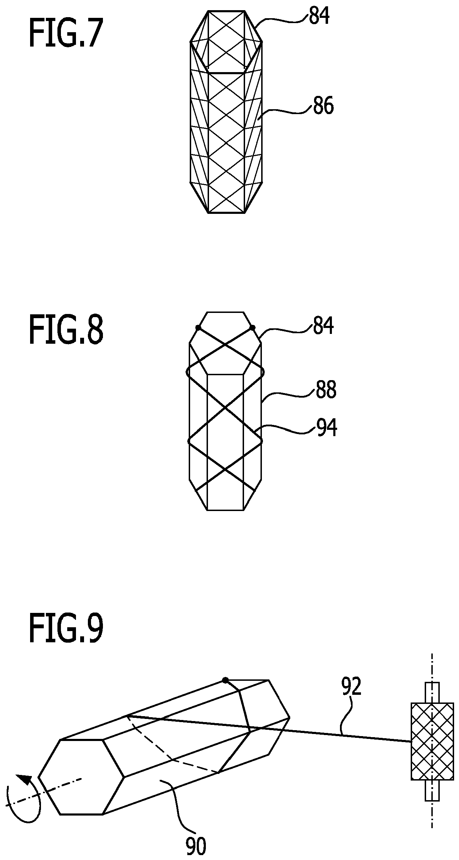

Bei einem Ausführungsbeispiel (Figur 7) werden die Röhrchen 84 aus einem harzgetränkten Flechtschlauch 86 hergestellt. Es ist beispielsweise ein sechseckiger Kern vorgesehen, auf welchen der Flechtschlauch aufgesteckt wird. Das Röhrchen 84 weist dadurch geschlossene Wände auf.

Bei einem alternativen Ausführungsbeispiel wird ein Röhrchen 84 über eine Gitterstruktur 88 gebildet. Ein solches Röhrchen 84 weist keine geschlossene Wand auf.

Die Gitterstruktur wird beispielsweise dadurch hergestellt, dass auf einen Kern, welcher beispielsweise einen sechseckigen Querschnitt hat, entsprechend ein harzgetränktes Kohlenstoff-Roving 92 gewickelt wird. Nach Entfernung des Kerns definiert die entsprechende Struktur 94 die Gitterstruktur 88.

Wie bereits erwähnt, werden dann solche Röhrchen 84 beispielsweise durch Fügepaste miteinander zu dem Vorkörper 30 verbunden, aus dem dann der Kernstruktur-Körper 32 und dann die entsprechende Kernstruktur 16 hergestellt wird.

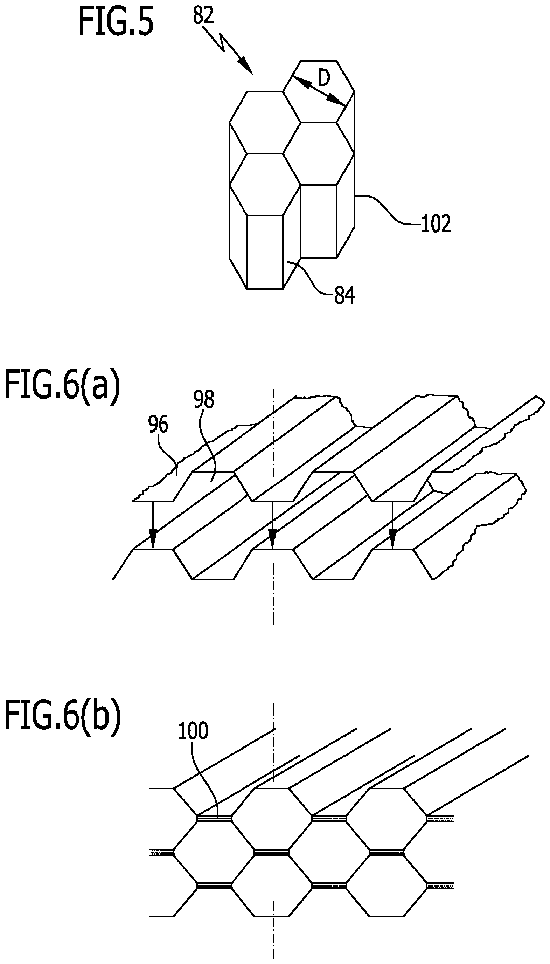

Es ist beispielsweise auch möglich, eine Wabenstruktur 82 über Platten 96 mit Ausbuchtungen 98 herzustellen. Es werden dazu mehrere aneinander angepasste Platten miteinander verbunden. Eine Fügung erfolgt über Fügepaste 100. Bei entsprechender Formung der Platten 96 mit den Ausbuchtungen 98 lässt sich eine Zellenstruktur mit beispielsweise im Querschnitt sechseckigen Zellen realisieren (vgl. Figur 6(b)).

Dadurch wiederum ergibt sich eine Wabenstruktur 82.

Die Wabenstruktur 82 weist Wandungen 102 von entsprechenden Zellen auf. Diese Wandungen 102 können geschlossen sein oder nicht geschlossen sein; beispielsweise bei Röhrchen 84 mit Gitterstruktur 88 sind diese nicht geschlossen. Es kann auch eine Gewebestruktur verwendet werden, welche nicht geschlossene Wandungen 102 bewirkt.

In dem Bauteil 10 sind die Wandungen insbesondere senkrecht zu der ersten Deckhaut 12 und der zweiten Deckhaut 14 orientiert.

In dem hergestellten Bauteil 10 ist die Kernstruktur 16 mit der ersten Deckhaut 12 und der zweiten Deckhaut 14 über Liniensegmente an entsprechenden Wandungen 20 der Kernstruktur 16 verbunden.

Erfindungsgemäß werden hochsteife C/C-SiC-Bauteile 10 bereitgestellt, welche mit relativ geringem Gewicht herstellbar sind. Zwischen hochfesten Deckhäuten 12, 14 lässt sich eine relativ leichte Kernstruktur 16 positionieren. Die Kernstruktur kann bezogen auf ihr Ausgangsmaterial (insbesondere einlagiges Kohlenstofffaser-Prepreg-Gewebe) ein Gewebe-Flächengewicht kleiner als 500 g/m² aufweisen.

Deckelplatten 28a, 28b, welche die Deckhäute 12, 14 bilden, und ein Kernstruktur-Körper 32, welcher die Kernstruktur 16 bildet, werden getrennt hergestellt. Es wird eine Fügung mit hoher mechanischer Festigkeit über Fügepaste erreicht, wobei eine definierte Einstellung der Fügepastemenge über einen Fügepastefilm an einem Hilfswerkzeug 38 mit definierter Dicke h erfolgt. Durch Ausbildung eines Meniskusbereichs 54 ergibt sich eine hohe mechanische Festigkeit unter gleichzeitiger Minimierung der benötigten Fügepaste. Es wird eine erleichterte Herstellung realisierbar mit einer Gewichtseinsparung.

Es erfolgt eine Fügung über eine mechanisch und thermisch/oxidativ stabile Fügung, welche vollständig oder überwiegend über SiC nach Aushärtung und Silizierung der Fügepaste erfolgt.

Die Kombination 34 lässt sich homogen silizieren ohne Si-Überschuss auf einer Bauteiloberfläche.

Es lassen sich so Platten in Sandwichstruktur mit hoher Biegesteifigkeit und hoher Beulsteifigkeit mit relativ geringem Gewicht herstellen. Die Steifigkeit einer solchen Platte wird über ihre gesamte Oberfläche erreicht. Durch eine Flüssigsilizierung lässt sich der Meniskusbereich 54 ausbilden mit einer hohen Festigkeit des hergestellten Bauteils (wie einer Platte). Durch eine Flüssigsilizierung insbesondere ohne Si-Überschuss auf den Bauteiloberflächen ist es insbesondere auch möglich, die Kombination 34 frei aufzustellen; es muss nur eine Stützung mit geringer Auflagefläche wie beispielsweise am Rand erfolgen. Dadurch werden Si-Anhäufungen durch Kapillarkräfte verhindert und überschüssiges Si kann abdampfen. Weiterhin ermöglichen die Hohlräume 24 in der Kernstruktur 16, d. h. die Offenheit der Kernstruktur 16, das Abdampfen eines Si-Überschusses.

Das hergestellte Bauteil 10 weist eine geringe bzw. nicht vorhandene Wärmedehnung auf. Ein entsprechendes Bauteil kann beispielsweise auf optische Bänke, Antennen, Spiegelträger, Teleskopstrukturen, Gehäusestrukturen verwendet werden. Es lässt sich für Thermalschutzstrukturen beispielsweise für Raumfahrzeuge einsetzen. Beispielsweise kann ein entsprechendes Bauteil verwendet werden für Chargiergestelle in Hochtemperaturofenanlagen bzw. als Träger bei der Wärmebehandlung von Metallen (wie Löten, Härten, Diffusionsschweißen usw.). Beispielsweise lassen sich dadurch auch Hochtemperaturwärmeüberträger in der Prozesstechnik realisieren. Bei entsprechender Ausbildung (wie beispielsweise bei einer Faltwabenstruktur) sind die Hohlräume 24 durchströmbar.

Beispielsweise können dadurch auch schnell bewegte Strukturen in Handhabungsmaschinen realisiert werden.

Die Kernstruktur 16 ist über Stirnseiten 22a, 22b (Endbereiche) ihrer Wandungen 20a, 20b linienhaft mit den Deckhäuten 12, 14 verbunden. Es ergibt sich durch die Meniskusbereiche trotz relativ geringer Kontaktfläche eine feste Fügeverbindung.

### Bezugszeichenliste

- 10: Bauteil
- 12: erste Deckhaut
- 14: zweite Deckhaut
- 16: Kernstruktur
- 18a, b: Fügebereich
- 20, 20a, 20b: Wandung
- 22a: erster Endbereich
- 22b: zweiter Endbereich
- 24: Hohlraum
- 26a: Vorkörper für erste Deckelplatte
- 26b: Vorkörper für zweite Deckelpaltte
- 28a: erste Deckelplatte
- 28b: zweite Deckelplatte
- 30: Vorkörper für Kernstruktur
- 31: Formwerkzeug
- 32: Kernstruktur-Körper
- 34: Kombination
- 36: Fügepaste
- 38: Hilfswerkzeug
- 40: Aufnahmebereich
- 42: Bodenfläche
- 44a, b: Abziehleiste
- 46: Schicht
- 48: Wandung
- 52: Vor-Meniskusbereich
- 54: Meniskusbereich
- 56: Fügematerial
- 58: Bereich
- 60: Faltwabenstruktur
- 62: Wandung
- 64: Band
- 66: erster Typ
- 68: zweiter Typ
- 70a, b: Schlitz
- 72: 90°/90°-Orientierung
- 74: 45°/45°-Orientierung
- 76: Zellen
- 78: Wandung
- 80: Kernstruktur
- 82: Wabenstruktur
- 84: Röhrchen
- 86: Flechtschlauch
- 88: Gitterstruktur
- 90: Kern
- 92: Kohlenstoff-Roving
- 94: Struktur
- 96: Platte
- 98: Ausbuchtung
- 100: Fügepaste
- 102: Wandung
- 200: Wandungsbegrenzungslinie

## Patentansprüche

1. Verfahren zur Herstellung eines karbidkeramischen Bauteils (10) mit Sandwichstruktur, bei dem getrennt aus einem jeweiligen Vorkörper (26a; 26b) eine erste Deckelplatte (28a) und eine zweite Deckelplatte (28b) als offenporöser C-Körper oder offenporöser C/C-Körper und ein Kernstruktur-Körper (32) als offenporöser C-Körper oder offenporöser C/C-Körper hergestellt werden, der Kernstruktur-Körper (32) zwischen der ersten Deckelplatte (28a) und der zweiten Deckelplatte (28b) positioniert wird und mittels Fügepaste eine Kombination (34) aus der ersten Deckelplatte (28a), dem Kernstruktur-Körper (32) und der zweiten Deckelplatte (28b) hergestellt wird, und anschließend ein Karbidbildungsvorgang an der Kombination (34) durch Si-Infiltrierung durchgeführt wird, **dadurch gekennzeichnet, dass** eine Kernstruktur (16) in dem Bauteil (10) und der Kernstruktur-Körper (32) Hohlräume (24) oder Freiräume zwischen Kernstrukturwandungen aufweisen, dass der Kernstruktur-Körper (32) mit Fügepaste (36) versehen wird, wobei die Fügepaste (36) auf Fügeflächen des Kernstruktur-Körpers (32) appliziert wird, und ein mit Fügepaste (36) versehener Kontaktbereich des Kernstruktur-Körpers (32) in Kontakt mit der entsprechenden Deckelplatte (28a; 28b) gebracht wird, wobei die entsprechende Deckelplatte (28a; 28b) vor der Fügung nicht mit Fügepaste bestrichen wird, und dass an einem Verbindungsbereich zwischen dem Kernstruktur-Körper (32) und der jeweiligen Deckelplatte (28a; 28b) ein Vor-Meniskusbereich (52) an Fügepaste (36) nach Aushärtung der Fügepaste (36) hergestellt wird,
- wobei der Vor-Meniskusbereich (52) eine variierende Breite bezogen auf eine Wandung des Kernstruktur-Körpers (32) aufweist,
- die Breite ausgehend von der verbundenen Deckelplatte (28a; 28b) weg abnimmt und
- die Breite des Vor-Meniskusbereichs (52) an der Deckelplatte (28a; 28b) größer ist als eine Breite der Wandung des Kernstruktur-Körpers (32),
und bei dem hergestellten Bauteil (10) zwischen einer Kernstruktur (16) und einer Deckhaut (12; 14) ein Meniskusbereich (54) an Fügematerial hergestellt wird,
- wobei der Meniskusbereich (54) eine variierende Breite bezogen auf eine Wandung der Kernstruktur (16) aufweist,
- die Breite ausgehend von der verbundenen Deckelplatte (28a; 28b) weg abnimmt und
- die Breite des Meniskusbereichs (54) an der Deckelplatte (28a; 28b) größer ist als eine Breite der Wandung der Kernstruktur (16).

2. Verfahren nach Anspruch 1, **dadurch gekennzeichnet, dass** der C-Körper oder C/C-Körper der ersten Deckelplatte (28a) und/oder der zweiten Deckelplatte (28b) und/oder der Kernstruktur-Körper (32) durch Pyrolyse eines entsprechenden Vorkörpers (26a; 26b; 30) hergestellt wird, und insbesondere dass der jeweilige Vorkörper (26a; 26b; 30) aus einem Fasergebilde mit Kohlenstofffasern und insbesondere Fasergewebe und einem Kohlenstoff-Precursor-Material hergestellt wird, und insbesondere dass der jeweilige Vorkörper (26a; 26b; 30) aus einem Prepreg-Material hergestellt wird.

3. Verfahren nach einem der vorangehenden Ansprüche, **dadurch gekennzeichnet, dass** der Kernstruktur-Körper (32) aus einer einzigen Wandungslage hergestellt wird, wobei insbesondere eine Wandung der Wandungslage sowohl mit der ersten Deckelplatte (28a) als auch der zweiten Deckelplatte (28b) verbunden wird, und insbesondere dass der Kernstruktur-Körper (32) aus einer einzigen Lage von Prepreg-Material hergestellt wird.

4. Verfahren nach einem der vorangehenden Ansprüche, **dadurch gekennzeichnet, dass** ein Vorkörper (30) für die Kernstruktur und/oder der Kernstruktur-Körper (32) ein Gewebe-Flächengewicht für Kohlenstofffasern kleiner als 500 g/m² und insbesondere kleiner als 400 g/m² und insbesondere kleiner als 300 g/m² und insbesondere kleiner als 200 g/m² und insbesondere kleiner als 150 g/m² aufweist.

5. Verfahren nach einem der vorangehenden Ansprüche, **dadurch gekennzeichnet, dass** (i) der Kernstruktur-Körper (32) als Faltstruktur oder Faltwabenstruktur (60) hergestellt wird, oder
dass (ii) der Kernstruktur-Körper (32) als Wellblechstruktur hergestellt wird, oder
dass (iii) der Kernstruktur-Körper (32) als Wabenstruktur (82) hergestellt wird, welche insbesondere Waben mit Dreiecksquerschnitt und/oder Rechteckquerschnitt und/oder Sechseckquerschnitt umfasst, und insbesondere dass Einzelwaben herstellt werden, welche zu der Wabenstruktur (82) verbunden werden, und insbesondere dass eine Einzelwabe aus einem Flechtschlauch (86) hergestellt wird, oder dass eine Einzelwabe als Gitterrohr hergestellt wird und insbesondere durch Wicklung von Kohlenstoff-Rovings an einem Wickelkern hergestellt wird, oder dass die Wabenstruktur durch Fügung von Platten (96) mit Ausbuchtungen hergestellt wird, oder
dass (iv) der Kernstruktur-Körper (32) aus C-Körper-Bändern (64; 66; 68) und/oder C/C-Körper-Bändern (64; 66; 68) hergestellt wird, wobei insbesondere Bänder (64) mit Schlitzen (70a; 70b) versehen sind und der Kernstruktur-Körper (32) durch Fixierung von Bändern (64) in Schlitzen (70a; 70b) von weiteren Bändern (64) hergestellt wird.

6. Verfahren nach einem der vorangehenden Ansprüche, **dadurch gekennzeichnet, dass** Kohlenstofffasern in dem Kernstruktur-Körper (32) und in einer hergestellten Kernstruktur (16) in einer 0°/90°-Orientierung oder +45°/-45°-Orientierung zu einer Begrenzungslinie (200) einer Wandung (20a; 20b) angeordnet sind.

7. Verfahren nach einem der vorangehenden Ansprüche, **dadurch gekennzeichnet, dass** der Kernstruktur-Körper (32) mit der ersten Deckelplatte (28a) und der zweiten Deckelplatte (28b) linienhaft über linienhafte Segmente des Kernstruktur-Körpers (32) verbunden wird, wobei insbesondere linienhafte Segmente an Stirnseiten von Kernstrukturwandungen angeordnet oder gebildet sind.

8. Verfahren nach einem der vorangehenden Ansprüche, **dadurch gekennzeichnet, dass** in der Kombination (34) der ersten Deckelplatte (28a), des Kernstruktur-Körpers (32) und der zweiten Deckelplatte (28b) Fügepaste (36) nur im Kontaktbereich des Kernstruktur-Körpers (32) mit der ersten Deckelplatte (28a) und der zweiten Deckelplatte (28b) an der entsprechenden Deckelplatte (28a; 28b) angeordnet wird und insbesondere, dass diese Anordnung über Kontakt mit dem Kernstruktur-Körper (32), welcher mit Fügepaste (36) versehen ist, erfolgt, und insbesondere dass für das Versehen des Kernstruktur-Körpers (32) mit Fügepaste (36) ein Hilfswerkzeug (38) verwendet wird, an welchem eine Fügepastenschicht einer definierten Dicke hergestellt wird, und insbesondere dass das Hilfswerkzeug (38) einen Aufnahmebereich (40) für Fügepaste (36) aufweist, welcher durch Abziehleisten (44a; 44b) begrenzt ist, wobei die definierte Dicke der Fügepastenschicht durch Abziehen zwischen den Abziehleisten (44a, 44b) hergestellt wird, und insbesondere dass der Kernstruktur-Körper (32) mit einer Wandung (48), welche mit der entsprechenden Deckelplatte (28a; 28b) zu verbinden ist, in die Fügepastenschicht eingetaucht wird und insbesondere bis zur Berührung mit einer Bodenfläche (42) des Aufnahmebereichs (40) eingetaucht wird.

9. Verfahren nach einem der vorangehenden Ansprüche, **dadurch gekennzeichnet, dass** eine Viskosität der Fügepaste (36) durch Zugabe von Kohlenstoffpulver und/oder SiC-Pulver und/oder Kaffeepulver eingestellt wird und/oder dass an der Kombination (34) aus erster Deckelplatte (28a), zweiter Deckelplatte (28b) und Kernstruktur-Vorkörper (32) die Fügepaste (36) gehärtet wird und insbesondere in einem Temperaturbereich zwischen 100°C und 250°C gehärtet wird.

10. Karbidkeramisches Bauteil mit Sandwichstruktur, umfassend eine erste Deckhaut (12), eine zweite Deckhaut (14) und eine Kernstruktur (16), welche zwischen der ersten Deckhaut (12) und der zweiten Deckhaut (14) positioniert ist, wobei die erste Deckhaut (12), die zweite Deckhaut (14) und die Kernstruktur (16) aus SiC oder C-SiC oder C/C-SiC hergestellt sind, und wobei Wandungen (20) der Kernstruktur (16) mit der ersten Deckhaut (12) und der zweiten Deckhaut (14) über eine SiC-Fügung verbunden sind, **dadurch gekennzeichnet, dass** zwischen Wandungen (20) der Kernstruktur (16) Hohlräume (24) liegen und dass ein Verbindungsbereich zwischen einer Wandung der Kernstruktur (16) und der entsprechenden Deckhaut (12; 14) einen Meniskusbereich (54) im Wesentlichen aus SiC-Material aufweist, wobei der Meniskusbereich (54) eine variierende Breite aufweist, wobei von der entsprechenden Deckhaut (12; 14) weg die Breite des Meniskusbereichs (54) sich verringert und wobei an der Deckhaut (12; 14) der Meniskusbereich (54) eine größere Breite als eine entsprechende Wandung (20) der Kernstruktur (16) aufweist.

11. Karbidkeramisches Bauteil nach Anspruch 10, **dadurch gekennzeichnet, dass** Kohlenstofffasern in der Kernstruktur (16) und/oder der ersten Deckhaut (12) und/oder der zweiten Deckhaut (14) in 0°/90°-Orientierung (72) oder +45°/-45°-Orientierung (74) zu einer Begrenzungslinie angeordnet sind.

12. Karbidkeramisches Bauteil mit Sandwichstruktur nach Anspruch 10 oder 11, **dadurch gekennzeichnet, dass** in den Hohlräumen (24) außerhalb des Meniskusbereichs (54) die entsprechende Deckhaut (12; 14) keine Beschichtung aufweist, welche aus Fügepaste entstanden ist.

13. Karbidkeramisches Bauteil mit Sandwichstruktur nach einem der Ansprüche 10 bis 12, **dadurch gekennzeichnet, dass** die Kernstruktur (16) mit den Deckhäuten (12; 14) über linienhafte Fügesegmente verbunden ist, wobei insbesondere die linienhaften Fügesegmente an Wandungen (20) der Kernstruktur (16) angeordnet sind, und/oder dass die Kernstruktur (16) bezüglich ihrer Wandungen (20) einlagig ist und insbesondere eine Wandung (20) der Kernstruktur (16) sowohl mit der ersten Deckhaut (12) als auch mit der zweiten Deckhaut (14) verbunden ist, und/oder dass die Kernstruktur (16) ausgebildet ist als Faltwabenstruktur (60) oder Wellblechstruktur oder Wabenstruktur (82) oder Bandstruktur aus aneinander positionierten und miteinander fixierten Bändern (64), und/oder **gekennzeichnet durch** eine Ausbildung als faserverstärktes karbidkeramisches Bauteil, wobei die erste Deckhaut (12), die zweite Deckhaut (14) und die Kernstruktur (16) aus C/C-SiC sind.

## Claims

1. Method of making a carbide-ceramic component part (10) having a sandwich structure, in which method are formed, separately from each other, from a respective preform (26a; 26b) a first cover plate (28a) and a second cover plate (28b) as an open-porous C-body or an open-porous C/C-body, and a core structure body (32) as an open-porous C-body or an open-porous C/C-body, the core structure body (32) is positioned between the first cover plate (28a) and the second cover plate (28b), and a combination (34) of the first cover plate (28a), the core structure body (32) and the second cover plate (28b) is produced by use of joining paste, and then a carbide forming process is performed on said combination (34) by infiltration thereof with Si, **characterized in that** a core structure (16) in the component part (10) and the core structure body (32) comprise cavities (24) or free spaces between core structure walls, and **in that** the core structure body (32) is provided with joining paste (36), wherein the joining paste (36) is applied to joining faces of the core structure body (32), and a contact area of the core structure body (32) provided with joining paste (36) is brought into contact with the corresponding cover plate (28a; 28b), wherein the corresponding cover plate (28a; 28b) is not coated with joining paste prior to the joining operation, and **in that** a pre-meniscus region (52) of joining paste (36) is generated at a connecting region between the core structure body (32) and the respective cover plate (28a; 28b) after the joining paste (36) has cured, wherein
- the pre-meniscus region (52) has a varying width, relative to a wall of the core structure body (32),
- the width decreases away from the connected cover plate (28a; 28b), and wherein
the width of the pre-meniscus region (52) at the cover plate (28a; 28b) is greater than a width of the wall of the core structure body (32),
and **in that** in the component part (10) produced, a meniscus region (54) of joining paste is generated between a core structure (16) and a cover skin (12; 14), wherein
- the meniscus region (54) has a varying width, relative to a wall of the core structure (16),
- the width decreases away from the connected cover plate (28a; 28b), and wherein
the width of the meniscus region (54) at the cover plate (28a; 28b) is greater than a width of the wall of the core structure (16).

2. Method in accordance with claim 1, **characterized in that** the C-body or the C/C-body of the first cover plate (28a) and/or the second cover plate (28b) and/or the core structure body (32) is produced by pyrolysis of a corresponding preform (26a; 26b; 30), and in particular **in that** the respective preform (26a; 26b; 30) is produced from a fibrous structure comprising carbon fibres, and in particular a fibrous woven fabric and a carbon precursor material, and in particular that the respective preform (26a; 26b; 30) is produced from a prepreg material.

3. Method in accordance with any one of the preceding claims, **characterized in that** the core structure body (32) is produced from a single wall layer, in particular wherein a wall of the wall layer is connected to both the first cover plate (28a) and the second cover plate (28b), and in particular **in that** the core structure body (32) is produced from a single layer of prepreg material.

4. Method in accordance with any one of the preceding claims, **characterized in that** a preform (30) for the core structure and/or the core structure body (32) has a fabric basis weight for carbon fibres of less than 500 g/m², and in particular less than 400 g/m², and in particular less than 300 g/m², and in particular less than 200 g/m², and in particular less than 150 g/m².

5. Method in accordance with any one of the preceding claims, **characterized in that** (i) the core structure body (32) is produced as a folded structure or folded honeycomb structure (60), or
**in that** (ii) the core structure body (32) is produced as a corrugated sheet metal structure, or
**in that** (iii) the core structure body (32) is produced as a honeycomb structure (82) which, in particular, comprises honeycombs having a triangular cross-section and/or a rectangular cross-section and/or a hexagonal cross-section, and in particular **in that** individual honeycombs are produced which are connected to form the honeycomb structure (82), and in particular **in that** an individual honeycomb is produced from a braided tube (86), or **in that** an individual honeycomb is produced as a lattice tube and is in particular produced by winding carbon rovings on a winding core, or **in that** the honeycomb structure is produced by joining plates (96) having protrusions, or
**in that** (iv) the core structure body (32) is produced from C-body strips (64; 66; 68) and/or C/C-body strips (64; 66; 68), in particular wherein strips (64) are provided with slots (70a; 70b) and the core structure body (32) is produced by fixing strips (64) in slots (70a; 70b) of other strips (64).

6. Method in accordance with any one of the preceding claims, **characterized in that** carbon fibres are arranged in the core structure body (32) and in a produced core structure (16) at 0/90 degrees orientation or at +45/-45 degrees orientation, relative to a boundary line (200) of a wall (20a; 20b).

7. Method in accordance with any one of the preceding claims, **characterized in that** the core structure body (32) is connected along a line to the first cover plate (28a) and the second cover plate (28b) via line contact segments of the core structure body (32), in particular wherein line contact segments are arranged or formed at end faces of core structure walls.

8. Method in accordance with any one of the preceding claims, **characterized in that** in the combination (34) of the first cover plate (28a), the core structure body (32) and the second cover plate (28b), joining paste (36) is arranged solely in the area of contact between the core structure body (32) and the first cover plate (28a) and second cover plate (28b) on the corresponding cover plate (28a; 28b), and in particular **in that** such arrangement is realized via contact with the core structure body (32) which is provided with joining paste (36), and in particular **in that**, for providing the core structure body (32) with joining paste (36), an auxiliary tool (38) is used on which a joining paste layer of a defined thickness is produced, and in particular **in that** the auxiliary tool (38) comprises a receiving area (40) for joining paste (36), which receiving area (40) is bounded by strike-off strips (44a; 44b), wherein the defined thickness of the joining paste layer is produced by striking off same between the strike-off strips (44a, 44b), and in particular **in that** the core structure body (32), at a wall (48) thereof that is to be connected to the corresponding cover plate (28a, 28b), is extended into the joining paste layer and is in particular extended thereinto all the way until it contacts a bottom surface (42) of the receiving area (40).

9. Method in accordance with any one of the preceding claims, **characterized in that** a viscosity of the joining paste (36) is adjusted by adding carbon powder and/or SiC-powder and/or coffee powder, and/or in that the joining paste (36) is cured on the combination (34) of first cover plate (28a), second cover plate (28b) and core structure preform (32), and is in particular cured in a temperature range between 100 °C and 250 °C.

10. Carbide-ceramic component part having a sandwich structure, comprising a first cover skin (12), a second cover skin (14) and a core structure (16), which latter is positioned between the first cover skin (12) and the second cover skin (14), wherein the first cover skin (12), the second cover skin (14) and the core structure (16) are made of SiC or C-SiC or C/C-SiC, and wherein walls (20) of the core structure (16) are connected to the first cover skin (12) and the second cover skin (14) via an SiC-joint, **characterized in that** cavities (24) are located between walls (20) of the core structure (16) and **in that** a connecting region between a wall of the core structure (16) and the corresponding cover skin (12; 14) has a meniscus region (54) of substantially SiC-material, wherein the meniscus region (54) has a varying width, wherein the width of the meniscus region (54) decreases away from the corresponding cover skin (12; 14), and wherein the width of the meniscus region (54) at the cover skin (12; 14) is greater than that of a corresponding wall (20) of the core structure (16).

11. Carbide-ceramic component part in accordance with claim 10, **characterized in that** carbon fibres are arranged in the core structure (16) and/or the first cover skin (12) and/or the second cover skin (14) at 0/90 degrees orientation or at +45/-45 degrees orientation, relative to a boundary line.

12. Carbide-ceramic component part having a sandwich structure in accordance with claim 10 or 11, **characterized in that** in the cavities (24) outside of the meniscus region (54), the corresponding cover skin (12; 14) is free of a coating that has formed from joining paste.

13. Carbide-ceramic component part having a sandwich structure in accordance with any one of claims 10 to 12, **characterized in that** the core structure (16) is connected to the cover skins (12; 14) via line contact joining segments, in particular wherein line contact joining segments are arranged at walls (20) of the core structure (16), and/or in that the core structure (16) is of single-layer construction relative to its walls (20), and in particular **in that** a wall (20) of the core structure (16) is connected to both the first cover skin (12) and the second cover skin (14), and/or **in that** the core structure (12) is configured as a folded honeycomb structure (60), or corrugated sheet metal structure, or honeycomb structure (82), or strip structure of strips (64) positioned next to one another and fixed together, and/or **characterized by** being formed as a fiber-reinforced carbide-ceramic component part, wherein the first cover skin (12), the second cover skin (14) and the core structure (16) are made of C/C-SiC.

## Revendications

1. Procédé de fabrication d'un composant en céramique/carbure (10) avec une structure en sandwich, où une première plaque de recouvrement (28a) et une deuxième plaque de recouvrement (28b) sont fabriquées, séparément d'une préforme (26a ; 26b) respective en tant que corps en C à pores ouverts ou en corps en C/C à pores ouverts et un corps de structure centrale (32) est fabriqué en tant que corps en C à pores ouverts ou en tant que corps en C/C à pores ouverts, le corps de structure centrale (32) est positionné entre la première plaque de recouvrement (28a) et la deuxième plaque de recouvrement (28b) et une combinaison (34) est fabriquée au moyen de pâte d'assemblage à partir de la première plaque de recouvrement (28a), du corps de structure centrale (32) et de la deuxième plaque de recouvrement (28b), puis une opération d'obtention de carbure est effectuée sur la combinaison (34) par infiltration de Si, **caractérisé en ce qu'**une structure centrale (16) dans le composant (10) et le corps de structure centrale (32) présentent des cavités (24) ou des espaces libres entre des parois de structure centrale, que le corps de structure centrale (32) est pourvu de pâte d'assemblage (36), dans lequel la pâte d'assemblage (36) est appliquée sur des surfaces d'assemblage du corps de structure centrale (32), et une zone de contact, pourvue de pâte d'assemblage (36), du corps de structure centrale (32) est amenée en contact avec la plaque de recouvrement (28a ; 28b) correspondante, dans lequel la plaque de recouvrement (28a ; 28b) correspondante n'est pas enduite avant l'assemblage de pâte d'assemblage, et une pré-zone de ménisque (52) sur la pâte d'assemblage (36) est fabriquée après le durcissement de la pâte d'assemblage (36) sur une zone de liaison entre le corps de structure centrale (32) et la plaque de recouvrement (28a ; 28b) respective,
- dans lequel la pré-zone de ménisque (52) présente une largeur variable sur une paroi du corps de structure centrale (32),
- la largeur diminue en s'éloignant de la plaque de recouvrement (28a ; 28b) reliée, et
- la largeur de la pré-zone de ménisque (52) sur la plaque de recouvrement (28a ; 28b) est plus grande qu'une largeur de la paroi du corps de structure centrale (32),
et une zone de ménisque (54) est fabriquée sur du matériau d'assemblage dans le cas du composant (10) fabriqué entre une structure centrale (16) et une enveloppe couvrante (12 ; 14),
- dans lequel la zone de ménisque (54) présente une largeur variable par rapport à une paroi de la structure centrale (16),
- la largeur diminue en s'éloignant de la plaque de recouvrement (28a ; 28b) reliée, et
- la largeur de la zone de ménisque (54) sur la plaque de recouvrement (28a ; 28b) est plus grande qu'une largeur de la paroi de la structure centrale (16).

2. Procédé selon la revendication 1, **caractérisé en ce que** le corps en C ou le corps en C/C de la première plaque de recouvrement (28a) et/ou de la deuxième plaque de recouvrement (28b) et/ou le corps de structure centrale (32) sont fabriqués par pyrolyse d'une préforme (26a ; 26b ; 30) correspondante, et en particulier que la préforme (26a ; 26b ; 30) respective est fabriquée à partir d'une structure à base de fibres avec des fibres de carbone et en particulier de tissu à base de fibres et d'un matériau précurseur en carbone, et en particulier que la préforme (26a ; 26b ; 30) respective est fabriquée à partir d'un matériau préimprégné.

3. Procédé selon l'une quelconque des revendications précédentes, **caractérisé en ce que** le corps de structure principale (32) est fabriqué à partir d'une unique couche de paroi, dans lequel en particulier une paroi de la couche de paroi est reliée à la fois à la première plaque de recouvrement (28a) et à la deuxième plaque de recouvrement (28b), et en particulier que le corps de structure centrale (32) est fabriqué à partir d'une unique couche de matériau préimprégné.

4. Procédé selon l'une quelconque des revendications précédentes, **caractérisé en ce qu'**une préforme (30) pour la structure centrale et/ou le corps de structure centrale (32) présentent un poids surfacique de tissu pour les fibres de carbone inférieur à 500 g/m² et en particulier inférieur à 400 g/m² et en particulier inférieur à 300 g/m² et en particulier inférieur à 200 g/m² et en particulier inférieur à 150 g/m².

5. Procédé selon l'une quelconque des revendications précédentes, **caractérisé en ce que** (i) le corps de structure centrale (32) est fabriqué en tant que structure pliable ou en tant que structure alvéolaire pliable (60), ou
que (ii) le corps de structure centrale (32) est fabriqué en tant que structure en tôle ondulée, ou
que (iii) le corps de structure centrale (32) est fabriqué en tant que structure alvéolaire (82), laquelle comprend en particulier des alvéoles avec une section transversale triangulaire et/ou une section transversale rectangulaire et/ou une section transversale hexagonale, et en particulier que des alvéoles individuelles sont fabriquées, lesquelles sont reliées en la structure alvéolaire (82), et en particulier qu'une alvéole individuelle est fabriquée à partir d'un tuyau flexible tressé (86), ou qu'une alvéole individuelle est fabriquée en tant que tuyau grillagé et en particulier est fabriquée par bobinage de fils retors en carbone sur un noyau de bobine, ou que la structure alvéolaire est fabriquée par assemblage de plaques (96) avec des bombements convexes, ou
que (iv) le corps de structure centrale (32) est fabriqué à partir de bandes de corps en C (64 ; 66 ; 68) et/ou de bandes de corps en C/C (64 ; 66 ; 68), dans lequel en particulier des bandes (64) sont pourvues d'entailles (70a ; 70b) et le corps de structure centrale (32) est fabriqué par fixation de bandes (64) dans des entailles (70a ; 70b) d'autres bandes (64).

6. Procédé selon l'une quelconque des revendications précédentes, **caractérisé en ce que** des fibres de carbone sont disposées dans le corps de structure centrale (32) et dans une structure centrale (16) fabriquée selon une orientation 0°/90° ou une orientation +45°/-45° par rapport à une ligne de délimitation (200) d'une paroi (20a ; 20b).

7. Procédé selon l'une quelconque des revendications précédentes, **caractérisé en ce que** le corps de structure centrale (32) est relié à la première plaque de recouvrement (28a) et à la deuxième plaque de recouvrement (28b) de manière linéaire par l'intermédiaire de segments linéaires du corps de structure centrale (32), dans lequel en particulier des segments linéaires sont disposés ou formés sur des côtés frontaux de parois de structure centrale.

8. Procédé selon l'une quelconque des revendications précédentes, **caractérisé en ce que** dans la combinaison (34) de la première plaque de recouvrement (28a), du corps de structure centrale (32) et de la deuxième plaque de recouvrement (28b), de la pâte d'assemblage (36) est disposée seulement dans la zone de contact du corps de structure centrale (32) avec la première plaque de recouvrement (28a) et la deuxième plaque de recouvrement (28b) sur la plaque de recouvrement (28a ; 28b) correspondante et en particulier que ledit agencement est effectué par l'intermédiaire du contact avec le corps de structure centrale (32), lequel est pourvu de pâte d'assemblage (36), et en particulier qu'est utilisé, pour pourvoir le corps de structure centrale (32) de pâte d'assemblage (36) un outil d'aide (38), sur lequel est fabriquée une couche en pâte d'assemblage d'une épaisseur définie, et en particulier que l'outil d'aide (38) présente une zone de logement (40) pour de la pâte d'assemblage (36), laquelle est délimitée par des baguettes de retrait (44a ; 44b), dans lequel l'épaisseur définie de la couche de pâte d'assemblage est fabriquée par retrait entre les baguettes de retrait (44a, 44b), et en particulier que le corps de structure centrale (32) est enfoncé par une paroi (48), laquelle est à relier à la plaque de recouvrement (28a ; 28b) correspondante, dans la couche de pâte d'assemblage et en particulier est enfoncé jusqu'à entrer en contact avec une surface de fond (42) de la zone de logement (40).

9. Procédé selon l'une quelconque des revendications précédentes, **caractérisé en ce qu'**une viscosité de la pâte d'assemblage (36) est réglée par ajout de poudre de carbone et/ou de poudre de SiC et/ou de poudre de café, et/ou que la pâte d'assemblage (36) est durcie sur la combinaison (34) composée de la première plaque de recouvrement (28a), de la deuxième plaque de recouvrement (28b) et de la préforme de structure centrale (32) et est durcie en particulier dans une plage de températures entre 100 °C et 250 °C.

10. Composant en céramique/carbure avec une structure en sandwich, comprenant une première enveloppe couvrante (12), une deuxième enveloppe couvrante (14) et une structure centrale (16), laquelle est positionnée entre la première enveloppe couvrante (12) et la deuxième enveloppe couvrante (14), dans lequel la première enveloppe couvrante (12), la deuxième enveloppe couvrante (14) et la structure centrale (16) sont fabriquées à partir de SiC ou de C-SiC ou de C/C-SiC, et dans lequel des parois (20) de la structure centrale (16) sont reliées à la première enveloppe couvrante (12) et à la deuxième enveloppe couvrante (14) par l'intermédiaire d'un assemblage de SiC, **caractérisé en ce que** des cavités (24) se trouvent entre des parois (20) de la structure centrale (16), et qu'une zone de liaison entre une paroi de la structure centrale (16) et l'enveloppe couvrante (12 ; 14) correspondante présente une zone de ménisque (54) sensiblement composée d'un matériau à base de SiC, dans lequel la zone de ménisque (54) présente une largeur variable, dans lequel la largeur de la zone de ménisque (54) se réduit en s'éloignant de l'enveloppe couvrante (12 ; 14) correspondante et dans lequel la zone de ménisque (54) présente sur l'enveloppe couvrante (12 ; 14) une largeur plus grande qu'une paroi (20) correspondante de la structure centrale (16).

11. Composant en céramique/carbure selon la revendication 10, **caractérisé en ce que** des fibres de carbone sont disposées dans la structure centrale (16) et/ou dans la première enveloppe couvrante (12) et/ou dans la deuxième enveloppe couvrante (14) selon une orientation de 0°/90° (72) ou selon une orientation de +45°/-45° (74) par rapport à une ligne de délimitation.

12. Composant en céramique/carbure avec une structure en sandwich selon la revendication 10 ou 11, **caractérisé en ce que** l'enveloppe couvrante (12 ; 14) correspondante ne présente, dans les cavités (24), à l'extérieur de la zone de ménisque (54), aucun revêtement, qui s'est formé à partir de la pâte d'assemblage.

13. Composant en céramique/carbure avec une structure en sandwich selon l'une quelconque des revendications 10 à 12, **caractérisé en ce que** la structure centrale (16) est reliée aux enveloppes couvrantes (12 ; 14) par l'intermédiaire de segments d'assemblage linéaires, dans lequel en particulier les segments d'assemblage linéaires sont disposés sur des parois (20) de la structure centrale (16), et/ou que la structure centrale (16) est par rapport à ses parois (20) en une couche et en particulier une paroi (20) de la structure centrale (16) est reliée à la fois à la première enveloppe couvrante (12) et à la deuxième enveloppe couvrante (14), et/ou que la structure centrale (16) est réalisée en tant que structure alvéolaire pliable (60) ou structure en tôle ondulée ou en structure alvéolaire (82) ou en tant que structure en bande à partir de bandes (64) positionnées les unes sur les autres et fixées les unes aux autres, et/ou **caractérisé par** une réalisation en tant que composant en céramique/carbure renforcée par des fibres, dans lequel la première enveloppe couvrante (12), la deuxième enveloppe couvrante (14) et la structure centrale (16) sont en C/C-SiC.
